# EUROPÄISCHE PATENTSCHRIFT

(11) **EP 3 723 938 B1**
(45) Veröffentlichungstag und Bekanntmachung des Hinweises auf die Patenterteilung: **26.02.2025**
(21) Anmeldenummer: 18829259.3
(22) Anmeldetag: 12.12.2018
(51) Int. Cl.: B23Q 11/10, B05B 1/14, B05B 15/65, F16L 37/00

(54) **DÜSENANORDNUNG UND WERKZEUGMASCHINE MIT EINER DÜSENANORDNUNG**
NOZZLE ARRANGEMENT AND MACHINE TOOL COMPRISING A NOZZLE ARRANGEMENT
AGENCEMENT DE BUSES ET MACHINE-OUTIL COMPORTANT UN AGENCEMENT DE BUSES

(30) Priorität: 13.12.2017 DE 102017129840
(43) Veröffentlichungstag der Anmeldung: 21.10.2020
(73) Patentinhaber: Fritz Studer AG, 3612 Steffisburg (CH)
(72) Erfinder: HABEGGER, Martin, 3647 Reutigen (CH); RENFER, Daniel, 3661 Uetendorf (CH); BAUMGART, Christoph, 8802 Kilchberg (CH)
(74) Vertreter: Witte, Weller & Partner Patentanwälte mbB
(86) Internationale Anmeldenummer: PCT/EP2018/084619
(87) Internationale Veröffentlichungsnummer: WO 2019/115641

(56) Entgegenhaltungen:
- EP-A1- 1 495 840
- EP-A1- 1 495 840
- EP-A1- 1 495 840
- WO-A1-2013/160790
- WO-A1-2013/160790
- WO-A2-2009/148680
- WO-A2-2009/148680
- WO-A2-2009/148680
- WO-A2-2011/106801
- WO-A2-2011/106801
- WO-A2-2011/106801
- DE-A1- 102014 108 699
- DE-A1- 102014 108 699
- DE-A1- 102016 103 202
- DE-A1- 102016 103 202
- DE-A1- 102016 103 202
- DE-A1- 2 460 160
- DE-A1- 2 460 160
- DE-U1- 202009 002 485
- DE-U1- 202009 002 485
- DE-U1- 202012 000 078
- DE-U1- 202012 000 078
- US-A1- 2016 297 042
- US-A1- 2016 297 042
- US-A1- 2016 297 042
- US-A1- 2017 203 401
- US-A1- 2017 203 401
- US-A1- 2017 203 401

## Beschreibung

Die vorliegende Offenbarung betrifft eine Düsenanordnung für die Versorgung mit Kühlschmierstoffen (KSS) sowie Kühlschmiermitteln, sowie eine Werkzeugmaschine mit einer solchen Düsenanordnung. Ferner betrifft die vorliegende Offenbarung eine Verwendung eines Düsensatzes zur Bildung einer solchen Düsenanordnung.

Aus der DE 10 2016 103 202 A1 ist ein Verfahren zum Bereitstellen einer Fluidzufuhrvorrichtung zur speziellen Verwendung in einer Bearbeitungszone einer Bearbeitungsmaschine bekannt, mit den Schritten a) Rechnergestütztes Definieren der 3-dimensionalen Konfiguration der Bearbeitungszone unter Berücksichtigung des Werkstücks und des Werkzeugs, das zum Bearbeiten des Werkstücks in der Bearbeitungszone der Bearbeitungsmaschine verwendet werden soll; b) Rechnergestütztes Definieren der 3-dimensionalen Form und der Position mindestens einer spezifisch angepassten Austrittsdüse der Fluidzufuhrvorrichtung unter Einbeziehung von Information, die im Schritt a) definiert wurde; c) Bereitstellen eines Datensatzes, der die 3-dimensionale Form dieser Austrittsdüse beschreibt; und d) Verwenden des Datensatzes, um diese Austrittsdüse mittels eines nummerisch kontrollierten Fertigungsverfahrens herzustellen.

Die US 2017/203401 A1 zeigt eine Werkzeugmaschine zum Bohren mit einer Düsenanordnung für Kühlluft, die auch zur Späneabfuhr dient. Die WO 2011/106801 A2 beschreibt eine Düsenanordnung zur Kühlmittelzufuhr. Die EP 1 495 840 A1 beschreibt eine Düse für ein Kühlmittel. Die US 2016/297042 A1 beschreibt ein Fräswerkzeug mit integrierten Kühlmittelkanälen. Die WO 2009/148680 A2 beschreibt Fluidleitungen für Treibstoffe für Gasturbinentriebwerke.

Die DE 10 2016 103 202 A1 schlägt vor, Austrittsdüsen anwendungsspezifisch und individual auszulegen und herzustellen. Dies erfolgt speziell unter Berücksichtigung einer konkreten Bearbeitungszone, also einer konkreten Anwendung.

Werkzeugmaschinen, etwa Schleifmaschinen, beispielsweise Rundschleifmaschinen, sind im Stand der Technik bekannt. So können Rundschleifmaschinen rotationssymmetrische Werkzeuge, etwa Schleifscheiben, aufweisen. Diese können in geeigneter Weise mit einem Werkstück zur Materialabtragung zusammenwirken. Rundschleifmaschinen können beispielsweise zum Außenrundschleifen, Innenrundschleifen, ferner zum Einstechschleifen bzw. Schrägeinstechschleifen ausgebildet sein. Neben Schleifscheiben können beim Rundschleifen grundsätzlich auch Schleifbänder zur Anwendung kommen. Neben rotationssymmetrischen Werkstückflächen können etwa auch exzentrisch ausgebildete Werkstückflächen bearbeitet werden, wenn die Werkstückaufnahme und eine Werkzeugeinheit, etwa der Spindelkopf, in geeigneter Weise antreibbar und relativ zueinander verfahrbar sind. Auf diese Weise können etwa Nockenwellen, Kurbelwellen oder ähnliche Werkstücke mit exzentrischen Geometrien bearbeitet bzw. geschliffen werden. Ferner sind Werkzeugmaschinen bekannt, die eine kombinierte Bearbeitung von Werkstücken erlauben, etwa kombinierte Schleif- und Drehmaschinen.

Ein zu bearbeitendes Werkstück kann etwa zwischen zwei Spitzen einer Werkstückaufnahme oder aber einseitig in einer Werkstückaufnahme aufgenommen sein. Daneben ist das sogenannte spitzenlose Schleifen bekannt, bei dem das Werkstück in der Schleifmaschine nicht (axial) zwischen Spitzen aufgenommen ist. Vielmehr kann das Werkstück etwa über Auflageschienen, Regelscheiben, Führungsrollen, Lünetten oder dergleichen aufgenommen und geführt werden.

Kühlschmierstoffe (KSS) (bzw. Kühlschmiermittel) sind für die spanabhebende Bearbeitung, insbesondere die Schleifbearbeitung, von hoher Bedeutung für die erzielbare Leistung, die Maximierung der Standzeit sowie das Erreichen der gewünschten Qualitätsanforderungen. Kühlschmierstoffe dienen zur Wärmeabfuhr und zur Verminderung der Reibung zwischen Werkzeug und Werkstück. Ferner werden Kühlschmierstoffe zur Spanabfuhr bzw. zur Abfuhr von Abrieb des Werkzeugs genutzt.

Gleichwohl stellen Kühlschmierstoffe einen nicht unerheblichen Kostenfaktor dar. Darüber können Kühlschmierstoffe eine nicht unerhebliche Umweltbelastung darstellen. Vor diesem Hintergrund genießt das KSS-Management bei Werkzeugmaschinen eine gewisse Bedeutung. Bei der Versorgung einer Werkzeugmaschine mit Kühlschmierstoffen geht es regelmäßig darum, die gewünschten Leistungswerte und Bearbeitungsergebnis bei geringer Belastung von Werkstück, Werkzeug und Maschine mit möglichst geringem Einsatz von Kühlschmierstoffen zu erreichen.

Für die Ausbringung der Kühlschmierstoffe am gewünschten Ort und mit gewünschter Richtung und/oder Strahlform gibt es etablierte Lösungen, beispielsweise das sogenannte Loc-Line System der Firma Lockwood Products, Inc., USA. Das System umfasst flexible Arme mit integrierten Fluidkanälen, die dreidimensional verformbar sind und mit Düsen bestückt werden können.

Es hat sich jedoch gezeigt, dass derartige Systeme an ihre Grenzen gelangen können, wenn die Aufgabe darin besteht, mit möglichst geringem KSS-Einsatz die gewünschten Zielwerte hinsichtlich Leistung, Standzeit, Qualität zu erreichen. Dies trifft beispielsweise auf bestimmte Anwendungen in der Schleifbearbeitung zu, insbesondere bei solchen Anwendungsfällen, bei denen eine lange Eingriffslinie (also eine breite Schleifscheibe) genutzt wird, um die Abtragsleistung zu erhöhen. In solchen Fällen ist es wünschenswert, die Kühlschmierstoffe derart in einen Spalt zwischen Werkzeug und Werkstück einzubringen, dass dort entlang der Länge der Eingriffslinie eine möglichst vollständige Benetzung bzw. Umspülung erfolgt. Wenn bei der Schleifbearbeitung keine effiziente Wärmeabfuhr erfolgt, muss mit sogenanntem Schleifbrand gerechnet werden, also mit einer thermischen Beschädigung des Werkstücks.

Aus der EP 1 772 233 A1 ist eine Düsenanordnung für die Kühlschmierstoffzufuhr bekannt, die einen Verteilerblock und eine Mehrzahl von nebeneinander angeordneten nadelförmigen Düsen aufweist. Mit einer solchen Gestaltung ist es bereits möglich, breite Gestaltungen von Düsen mit ausgeprägter Längserstreckung zu nutzen, um bei Bearbeitung mit breiten Schleifscheiben für eine vollständige Benetzung zu sorgen. Es hat sich jedoch gezeigt, dass auch diese Gestaltung nicht für jeden Anwendungsfall eine optimale Lösung bereitstellt. Beispielsweise ist die Strömungsführungskontur in der Düsenanordnung, etwa beim Übergang zwischen dem Verteilerblock und den daran aufgenommenen Nadeldüsen bauartbedingt nicht optimal gestaltet.

Vor diesem Hintergrund liegt der vorliegenden Offenbarung die Aufgabe zugrunde, eine Düsenanordnung, eine mit einer solchen Düsenanordnung versehene Werkzeugmaschine, insbesondere Schleifmaschine, sowie eine Verwendung eines Düsensatzes zur Bildung einer Düsenanordnung anzugeben, die zur weiteren Erhöhung der Leistung und Effizienz der KSS-Versorgung beitragen. Insbesondere soll dazu beigetragen werden, mit möglichst geringem KSS-Einsatz eine möglichst optimale KSS-Versorgung zu gewährleisten. Dies soll schlussendlich zur Senkung des KSS-Verbrauchs und ferner nach Möglichkeit zur Senkung der Betriebskosten beitragen.

Darüber hinaus soll die Düsenanordnung möglichst strömungsgünstige gestaltet sein, um einen optimalen Einsatz der Kühlschmierstoffe zu ermöglichen. Dies soll die Effizienz der Wärmeabfuhr sowie der Abführung von Spänen bzw. Abrieb erhöhen. Ferner soll für möglichst günstige Reibungsverhältnisse zwischen Werkstück und Werkzeug gesorgt werden.

Darüber hinaus soll mit einer möglichst überschaubaren Anzahl an Einzelteilen bei geringem Montageaufwand bzw. Rüstaufwand eine hohe Variantenvielfalt bereitgestellt werden, um die Düsenanordnung an vielfältige Anwendungsfälle anzupassen.

Gemäß einem ersten Aspekt der vorliegenden Offenbarung wird die Aufgabe der Erfindung durch eine modular gestaltete Düsenanordnung gemäß dem unabhängigen Anspruch 1 gelöst.

Die Aufgabe der Erfindung wird auf diese Weise vollkommen gelöst.

Zumindest die zumindest eine Düse ist aus einem durch ein additives Herstellverfahren verarbeitbaren Werkstoff gebildet, insbesondere aus Kunststoffwerkstoffen. Mit anderen Worten ist zumindest die zumindest eine Düse mittels additiver Fertigung bzw. mittels sogenanntem 3D-Druck hergestellt. Die Herstellung erfolgt vorzugsweise ohne Nachbearbeitung der internen Strömungsführungskontur.

Ein wesentlicher Vorteil, der sich durch die Gestaltung als additiv gefertigtes Bauteil ergibt, ist die gestalterische Freiheit bei der Auslegung der Strömungsführungskontur. Mit anderen Worten können Strömungskanäle, Übergänge, Umlenkungen und Ähnliches strömungsgünstig gestaltet sein, ohne auf die Grenzen bekannter umformender, urformender oder abtragender Bearbeitungsverfahren Rücksicht nehmen zu müssen. Dies kann den Strömungswiderstand der Strömungsführungskontur der Düsenanordnung beträchtlich verringern. Druckverluste lassen sich reduzieren. Die Kühlschmierstoffe können effizienter eingesetzt werden.

Auf diese Weise kann bei gegebener Durchflussmenge und/oder gegebenem Druck des Kühlschmierstoffs am Eingang der Düsenanordnung ein Ausbringen der gewünschten Menge mit hohem Druck und hoher Geschwindigkeit erfolgen. Dies erhöht die Spülwirkung. Ferner ergibt sich eine günstige Schmierung sowie Wärmeabführung.

Die KSS-Düse (auch: Düse) ist aus einem Düsensatz ausgewählt, der mehrere Düsen umfasst, die vorzugsweise mehreren Düsentypen zugehörig sind. Auf diese Weise kann die Düsenanordnung modular zusammengestellt werden. Die Düsen können sich beispielsweise hinsichtlich der Anordnung/Ausrichtung ihrer Austrittsöffnungen unterscheiden. Ferner können sich die Düsen hinsichtlich der effektiven Strömungsquerschnitte der Austrittsöffnungen unterscheiden.

Es wurde erkannt, dass bereits Düsenanordnungen aus Kunststoff bei der KSS-Versorgung hinreichende Standzeiten erreichen können. Demgemäß sind vorzugsweise der Verteilerblock sowie die zumindest eine KSS-Düse im Wesentlichen aus Kunststoff hergestellt. Dies gilt insbesondere für diejenigen Abschnitte, die die Strömungsführungskontur bzw. die Strömungskanäle bilden. Die Kühlschmierstoffe können folglich mit den Kunststoffwerkstoffen in Kontakt treten. Es hat sich jedoch gezeigt, dass nichtsdestotrotz eine hinreichend lange Lebensdauer gegeben ist.

Nichtsdestotrotz ist es auch denkbar, die zumindest eine KSS-Düse und/oder den Verteilerblock auch aus Nicht-Kunststoffen zu fertigen. Mittlerweile ist auch die Verarbeitung von Metallwerkstoffen oder Hybrid-Verbundwerkstoffen mittels 3D-Druck oder anderen additiven Verfahren vorstellbar.

Der modulare Aufbau der Düsenanordnung hat den Vorteil, dass in einfacher Weise verschiedene Konfigurationen bereitgestellt werden können. Ferner ermöglicht der modulare Aufbau in einfacher Weise eine Variantenbildung. Im Verschleißfall bzw. im Schadensfall ist es möglich, nur diejenigen Komponenten auszutauschen, die tatsächlich betroffen sind.

Die Düsenanordnung gemäß der vorliegenden Offenbarung macht sich ferner zunutze, dass mittlerweile Kunststoffbauteile mittels additiver Herstellverfahren ohne Nachbearbeitung oder im Wesentlichen ohne Nachbearbeitung erzeugbar sind, die gleichwohl eine hinreichend gute Oberflächengüte aufweisen. Dies gilt insbesondere für die Strömungsführungskontur mit den Strömungskanälen im Inneren der Bauteile. Mit anderen Worten erhöht sich der Strömungswiderstand durch die Oberflächenstruktur der Wände der Strömungskanäle nicht übermäßig. Folglich steht dies einer Anwendung für die KSS-Versorgung nicht im Wege. Es ist keine Nachbearbeitung der Wände der Strömungskanäle erforderlich. Dies soll jedoch nicht ausschließen, dass unter Umständen trotzdem eine Nachbearbeitung (Abtragen, Glätten, Beschichten, Imprägnieren, etc.) vorgenommen wird. Der hierfür zu veranschlagende (Gesamt-)Aufwand ist gleichwohl oft noch weitaus geringer als bei konventioneller Fertigung.

Gemäß einem Ausführungsbeispiel sind die Düsen aus Polymethylmethacrylat (PMMA) oder einem vergleichbaren Acrylat hergestellt. Beispielsweise bietet sich hierzu die Herstellung in einem Stereolithografie-Verfahren (STL) an. Diese Kombination aus Werkstoff und Herstellverfahren erlaubt eine hohe Oberflächengüte, zumindest bezogen auf das Feld der additiven Fertigung. Ferner erlaubt diese Kombination aus Werkstoff und Herstellverfahren die Gestaltung und Fertigung filigraner Strukturen mit hoher Auflösung, so dass Strömungskanälen in den Düsen fein strukturiert gestaltet sein können. Es lassen sich effektive Strömungsquerschnitte, insbesondere am Austritt, erreichen, die einen erzielbaren minimalen Bohrungsdurchmesser von wenigen Millimetern bis hin zu 1 mm aufweisen. Dies erlaubt eine gute Strahlführung sowie die Ausbringung mit hoher Geschwindigkeit.

Gemäß einem Ausführungsbeispiel ist der Verteilerblock aus einem Polyamid (PA) oder einem vergleichbaren Polymer hergestellt. Beispielsweise bietet sich hierzu die Herstellung in einem Lasersinter-Verfahren (SLS - selektives Lasersintern) an. Ein derartiges Verfahren erreicht zwar nicht die Oberflächengüte sowie die feine Auflösung des STL-Verfahrens. Jedoch hat sich gezeigt, dass die mittels SLS oder vergleichbaren Verfahren erzielbaren Oberflächeneigenschaften sowie das erzielbare Auflösungsvermögen (Fähigkeit zur Erzeugung filigraner Strukturen) für die Verwendung als Verteilerblock völlig genügen. Umgekehrt bietet die Herstellung aus einem Polyamid oder einem vergleichbaren Werkstoff eine hohe Festigkeit und eine hinreichende Zähigkeit, zumindest bezogen auf das Feld der additiven Fertigung.

Die Kombination zweier additiver Herstellverfahren bzw. verschiedener mittels additiver Herstellverfahren verarbeitbarer Werkstoffe trägt zur Gewährleistung der gewünschten Eigenschaften bei. Mithin ist es von Vorteil, wenn der Verteilerblock aus einem Werkstoff verhältnismäßig hoher Festigkeit und Zähigkeit besteht. Ferner ist es von Vorteil, wenn die zumindest eine KSS-Düse aus einem Werkstoff besteht, der die Erzeugung filigraner Strömungskanälen mit guten Oberflächeneigenschaften ermöglicht. Effektive Strömungsquerschnitte im Verteilerblock sind wesentlich größer als effektive Strömungsquerschnitte in der zumindest einen KSS-Düse. Insofern ist es nicht mit wesentlichen Nachteilen verbunden, wenn der Verteilerblock aus einem Werkstoff bzw. durch ein Verfahren hergestellt ist, die hinsichtlich der Oberflächeneigenschaften sowie des Auflösungsvermögens nicht die Bereiche erreichen, die für die KSS-Düse erforderlich sind. Umgekehrt ist es nicht unbedingt erforderlich, dass der Werkstoff bzw. das Herstellverfahren für die KSS-Düse die Festigkeit bzw. Zähigkeit ermöglichen, die beim Verteilerblock gefordert ist/sind.

Vorzugsweise ist die Strömungsführungskontur sowohl im Verteilerblock als auch in der zumindest einen KSS-Düse darauf ausgelegt, eine möglichst laminare Strömung zu ermöglichen, wobei Turbulenzen möglichst vermieden werden.

Die strömungsoptimierte, gekrümmte Struktur ist mittels klassischer abtragender Verfahren nicht oder nur mit unverhältnismäßig hohem Aufwand herstellbar. Dies gilt insbesondere für Krümmungen, Umlenkungen, Verjüngungen, Aufweitungen, etc. Ein weiterer Vorteil, der mit der additiven Herstellung verknüpft ist, ist die große Gestaltungsfreiheit. Bei der Auslegung der Strömungsführungskontur bzw. der Strömungskanäle muss keine oder nur wenig Rücksicht auf etwaige Beschränkungen genommen werden, die durch das/die Herstellverfahren bedingt sind.

Gemäß einer beispielhaften Ausgestaltung der Düsenanordnung weist der Verteilerblock ferner einen Anschluss für einen KSS-Sensor auf. Bei dem KSS-Sensor handelt es sich vorzugsweise um einen Drucksensor und/oder Durchflusssensor. Der KSS-Sensor kann beispielsweise als Staudrucksensor, Strömungssensor, etc. gestaltet sein.

Wenn ein KSS-Sensor verbaut ist, kann eine Regelung des Kühlschmierstoffes, der die Düsenanordnung durchströmt, erfolgen, wobei über den KSS-Sensor eine Rückmeldung über aktuelle Strömungsverhältnisse (Druck, Durchfluss, Geschwindigkeit, etc.) möglich ist. Ein vom KSS-Sensor bereitgestellte Signal kann von einer (übergeordneten) Steuerung der KSS-Versorgung genutzt werden, um eine Pumpe, Regelventile oder ähnliches anzusteuern, um die gewünschten Strömungseigenschaften zu erzielen. Das vom KSS-Sensor bereitgestellte Signal kann auch genutzt werden, um eine aktuelle Konfiguration der Düsenanordnung zu verifizieren.

Gemäß einer weiteren beispielhaften Ausgestaltung umfasst die Düsenanordnung eine Mehrzahl von Düsen, die jeweils mit einem Ausgang gekoppelt sind. Auf diese Weise kann eine große effektive Wirklänge bereitgestellt werden, die mit den Kühlschmierstoffen benetzbar ist. Beispielhaft sind die Ausgänge am Verteilerblock in einer Reihe nebeneinander angeordnet. Der Verteilerblock kann beispielsweise drei, vier oder fünf nebeneinander angeordnete Ausgänge umfassen. Demgemäß können die Düsen nebeneinander in den Ausgängen am Verteilerblock aufgenommen sein. Gemäß dem obigen Beispiel können drei, vier oder fünf Düsen angebracht sein, die dem gleichen Düsentyp oder verschiedenen Düsentypen zugehörig sein können. Es ist auch vorstellbar, weniger Düsen zu verbauen, wenn nicht genutzte Ausgänge über Blindstopfen verschlossen werden.

Gemäß der Erfindung weisen die Ausgänge jeweils einen Sitz zur Aufnahme eines Anschlussstutzens der zumindest einen Düse auf. Vorzugsweise ist die Gestaltung des Sitzes bei den Ausgängen vereinheitlicht, so dass Düsen in einfacher Weise von einem Ausgang in einen weiteren Ausgang gesetzt werden können. Gemäß einer weiteren beispielhaften Ausgestaltung der Düsenanordnung weisen verbaubare KSS-Düsen verschiedener Düsentypen eine einheitliche Gestaltung des Anschlussstutzens auf. Dies vereinfacht die Erzeugung der gewünschten Konfiguration der Düsenanordnung.

Gemäß einer weiteren beispielhaften Ausgestaltung der Düsenanordnung weist die Düse eine Anschlagplatte auf, wobei sich der Anschlussstutzen ausgehend von der Anschlagplatte erstreckt, und wobei an der Anschlagplatte ein Lagesicherungselement angeordnet ist, das im gefügten Zustand in eine Aufnahme am Sitz einrückt und im montierten Zustand eine Drehlage der Düse am Sitz definiert. Auf diese Weise kann eine Fehlmontage der Düse vermieden werden. Ferner lässt sich die lagerichtige Montage der Düse vereinfachen. Die Fluidführung kann in der gewünschten Form erfolgen.

Gemäß einer weiteren beispielhaften Ausgestaltung der Düsenanordnung trägt der Anschlussstutzen der zumindest einen Düse eine erste Dichtung, die in einer Aufnahmenut angerordnet ist, insbesondere eine radial wirksame Ringdichtung. Beispielsweise kann die Dichtung als O-Ringdichtung gestaltet sein.

Gemäß einer beispielhaften Weiterbildung dieser Ausgestaltung ist die Aufnahmenut der ersten Dichtung zu einer Längsachse des Anschlussstutzens exzentrisch gestaltet oder versetzt, zumindest leicht versetzt. Das Versatzmaß kann wenige Zehntelmillimeter betragen. Beispielhaft weist der Anschlussstutzen eine Zylinderkontur auf, die eine Längsachse des Anschlussstutzens definiert. Die Zylinderkontur ist an eine Zylinderkontur (Bohrung) des Sitzes der Aufnahme angepasst. Die Nut für die erste Dichtung ist gemäß diesem Ausführungsbeispiel sowohl zum Anschlussstutzen als auch zum Sitz leicht exzentrisch versetzt. Dies kann eine Gestaltung umfassen, bei der die Nut zylindrisch gestaltet ist, jedoch eine Achse der Nut zur Längsachse des Anschlussstutzens versetzt ist. Es ist jedoch auch vorstellbar, die Nut für die erste Dichtung nichtzylindrisch zu gestalten (etwa oval oder eiförmig), um die gewünschte Exzentrizität bzw. den gewünschten Versatz zu erreichen.

Mit anderen Worten weist die Nut eine nicht-konzentrisch (exzentrisch) zur Längsachse orientierte Gestalt auf, die eine Vorspannung erzeugt, die den Anschlussstutzen relativ zum Sitz in eine nicht-konzentrische (exzentrische) Ausrichtung drängt.

Die leicht versetzte Anordnung der Nut für die radial wirksame Dichtung ermöglicht eine definierte radiale (einseitig radial nach außen gerichtete) Vorspannung des Anschlussstutzens der Düse im Aufnahmesitz am Verteilerblock. Dies hat den Vorteil, dass trotz eines gewissen Fügespiels zwischen dem Anschlussstutzen und dem Sitz eine definierte Aufnahme der Düse möglich ist. Schlussendlich kann auf diese Weise ein Düsenaustritt hochgenau positioniert und orientiert werden, wodurch sich der KSS-Strom mit der erforderlichen Genauigkeit ausrichten lässt.

Die oben genannte Maßnahme verdeutlicht, dass die Herstellung mittels additiver Fertigung Herausforderungen mit sich bringen kann, die mittels unkonventioneller Lösungen bewältigt werden können. Bei der Nutzung klassischer Herstellverfahren würde eine naheliegende Lösung dahingehen, die Teile mit höherer Genauigkeit zu fertigen, um eine perfekte oder nahezu perfekte konzentrische Ausrichtung zwischen Aufnahmestutzen und Sitz zu ermöglichen. Dies ist jedoch bei der additiven Fertigung nicht möglich. Demgemäß wird unter Umständen sogar eine leichte Verkippung zwischen dem Aufnahmestutzen und dem Sitz akzeptiert, da dies zu einer reproduzierbaren Ausrichtung führt.

Auf diese Weise können zwei additiv gefertigte Bauteile miteinander gefügt werden, die fertigungsbedingt mit einem gewissen Spiel versehen sein müssen.

Gemäß der Düsenanordnung von Anspruch 1 sind im gekoppelten Zustand zwischen dem Sitz und dem Anschlussstutzen eine erste Dichtung und eine zweite Dichtung vorgesehen, insbesondere zwei Ringdichtungen, wobei die erste Dichtung als radial wirksame Dichtung und die zweite Dichtung als axial wirksame Dichtung gestaltet ist. Die radial wirksame (erste) Dichtung kann gemäß dem voranstehenden Ausführungsbeispiel zumindest leicht versetzt zur Längsachse des Anschlussstutzens angeordnet sein. Dies ist jedoch nicht bei sämtlichen Ausführungsformen erforderlich.

Die axial wirksame Dichtung kann insbesondere an einer Stirnseite des Anschlussstutzens sitzen, die dem Verteilerblock zugewandt ist. In die Stirnseite kann eine entsprechende Aufnahmeausnehmung oder Aufnahmenut für die axial wirksame Dichtung vorgesehen sein.

Die Kombination zweier Dichtungen hat den Vorteil, dass die Gefahr von Druckverlusten, Leckagen und damit verbundenen Auswirkungen auf die Strömungsverhältnisse sehr gering ist. Die Dichtung kann druckdicht und flüssigkeitsdicht am Ausgang des Verteilerblocks aufgenommen werden.

Gemäß der Erfindung ist am Anschlussstutzen eine Nut, insbesondere eine umlaufende Nut, ausgebildet, die mit einem Sicherungsschieber zusammenwirkt. Beispielsweise ist der Sicherungsschieber quer oder im Wesentlichen quer zu einer Fügerichtung der Düse in den Sitz am Ausgang des Verteilerblocks einführbar, um die Lage der Düse am Verteilerblock zu sichern. Die Nut kann als Einführnut oder Sicherungsnut bezeichnet werden. Gemäß einer beispielhaften Ausführungsform ist die Nut für den Sicherungsschieber am Aufnahmestutzen zwischen der ersten Dichtung und der zweiten Dichtung angeordnet. Die Nut für den Sicherungsschieber muss nicht unbedingt vollständig umlaufend sein, da der Sicherungsschieber regelmäßig lediglich von einer Seite radial zugeführt wird und folglich den Anschlussstutzen nicht vollständig umgreifen muss.

Gemäß einem Ausführungsbeispiel ist der Sicherungsschieber radial oder in ähnlicher Weise versetzt zur Fügerichtung der Düse in entsprechende Aufnahmeschlitze am Verteilerblock einführbar. Der Sicherungsschieber kann somit eine formschlüssige Lagesicherung bewirken, wenn ein Eingriff in die Nut am Anschlussstutzen der Düse sowie in entsprechende Ausnehmungen am Aufnahmesitz des Verteilerblocks erfolgt.

Gemäß einer weiteren beispielhaften Ausführungsform drängt der Sicherungsschieber im montierten Zustand die Düse axial in oder gegen den Sitz. Mit anderen Worten sind der Anschlussstutzen der Düse, der Sitz des Verteilerblocks und der Sicherungsschieber derart gestaltet, dass sich beim Einführen des Sicherungsschiebers eine Vorspannung ergibt, die axial auf den Anschlussstutzen einwirkt. Sofern eine axial wirksame Dichtung beim Anschlussstutzen verbaut ist, wird diese in Richtung auf eine Gegenfläche am Verteilerblock gedrängt, um die Dichtwirkung zu erhöhen.

Gemäß einer weiteren beispielhaften Ausführungsform ist der Sicherungsschieber dazu ausgebildet, in seinem eingeführten Zustand auf dem Anschlussstutzen bzw. im Aufnahmesitz zu Verrasten, so dass sich eine Lagesicherung bzw. Verliersicherung ergibt. Hierbei zu beachten, dass beim Betrieb der Düsenanordnung durch die herrschenden Strömungsverhältnisse und Druckverhältnisse gewisse Lösekräfte auf die Düse einwirken.

Gemäß einer weiteren beispielhaften Ausführungsform der Düsenanordnung sind Ausgänge, die nicht mit einer Düse versehen sind, jeweils durch einen Blindstopfen verschlossen. Demgemäß kann bei der Düsenanordnung zumindest ein Blindstopfen verbaut sein, wenn nicht alle Ausgänge auch tatsächlich genutzt werden. Auch der zumindest eine Blindstopfen ist vorzugsweise durch ein Verfahren zur additiven Fertigung aus einem in einem solchen Verfahren verarbeitbaren Kunststoff hergestellt. Der Blindstopfen kann aus dem gleichen Werkstoff wie die zumindest eine KSS-Düse sowie auf Basis des gleichen Herstellverfahrens hergestellt werden. Vorzugsweise weist der Blindstopfen einen Anschlussstutzen auf, der dem Anschlussstutzen der zumindest einen KSS-Düse entspricht. Demgemäß können bedarfsweise auch radial wirksame und/oder axial wirksame Dichtungen vorgesehen sein. Ferner kann eine Aufnahmenut/Einführnut für den Sicherungsschieber ausgebildet sein.

Gemäß einer weiteren beispielhaften Ausgestaltung der Düsenanordnung weist zumindest eine verbaute Düse einen aufgefächerten Fluidpfad auf. Ein solcher aufgefächerter Fluidpfad ist vorzugsweise durch ein additiv gefertigtes Volumen definiert, das die Strömungsführungskontur mit den Strömungskanälen formt. Auf diese Weise kann ein aufgefächerter, linienartiger oder angenähert linienartiger KSS-Strahl erzeugt werden.

Gemäß einer weiteren beispielhaften Ausgestaltung der Düsenanordnung weist zumindest eine verbaute Düse eine Verzweigung auf, die eine Mehrzahl von Auslassöffnungen definiert. Dies kann genutzt werden, um den Fluidpfad aufzufächern. Wiederum kann die Verzweigung durch ein additivgefertigtes Volumen definiert sein, das die Strömungsführungskontur mit entsprechenden Strömungskanälen bildet. Derartige Gestaltungen können durch abtragende Verfahren nicht oder nicht ohne weiteres hergestellt werden. Gemäß dieser Ausgestaltung wird der aufgefächerte KSS-Strahl durch mehrere (Teil-)Strahlen erzeugt. Beispielhaft kann eine KSS-Düse drei, vier oder fünf nebeneinander angeordnete Auslassöffnungen aufweisen. Insgesamt kann also der Strahl durch die Düsenanordnung weit unterteilt bzw. weit aufgefächert werden.

Alternativ ist es auch vorstellbar, die zumindest eine KSS-Düse als Breitschlitzdüse zu gestalten. Eine Breitschlitzdüse weist ein ausgeprägtes Breiten-Höhen-Verhältnis auf, wobei die Breite ein Vielfaches der Höhe beträgt (etwa 5:1 bis hin zu 10:1 oder gar 20:1).

Gemäß einer weiteren beispielhaften Ausführungsform der Düsenanordnung weist die zumindest eine Düse zueinander versetzte Auslassöffnungen auf. Dabei handelt es sich gemäß einem Ausführungsbeispiel um Auslassöffnungen, die in einer ersten Reihe und einer zweiten Reihe angeordnet sind, die zur ersten Reihe winkelversetzt ist. Jede der beiden Reihen umfasst zumindest eine Auslassöffnung. Es ist vorstellbar, die beiden Reihen um 90° zueinander zu versetzen.

Eine solche Gestaltung der Düse eignet sich insbesondere für das sogenannte Schulterschleifen oder ähnliche Schleifvorgänge, die Eckkonturen betreffen. Daher kann eine solche Düse auch als Schulterdüse bezeichnet werden. So können die Ausgänge des Verteilerblocks mit zumindest einer geraden Düse bestückt werden, die Auslassöffnungen aufweist, die in einer einzigen Reihe angeordnet sind, wobei am (rechten oder linken Rand) des Verteilerblocks eine Schulterdüse angeordnet ist, die einer Schulter am Werkstück zugeordnet ist. Eine Schulterdüse eignet sich zum Schrägeinstichschleifen. Die Schulterdüse kann Konfigurationen aufweisen, betreffend die erste Reihe und die zweite Reihe, die etwa 2x3, 1×4, 4x1, 3x2 Auslassöffnungen, usw. umfassen.

Gemäß einer weiteren beispielhaften Ausgestaltung der Düsenanordnung weist der Düsensatz zumindest eine erste additiv gefertigte Düse eines ersten Düsentyps, und zumindest eine zweite additiv gefertigte Düse eines zweiten Düsentyps auf, die sich hinsichtlich der Anordnung ihrer Auslassöffnungen und/oder der effektiven Strömungsquerschnitte unterscheiden. Wie vorstehend bereits ausgeführt, sind gerade Düsen und Schulterdüsen denkbar. Sowohl bei den geraden Düsen als auch bei den Schulterdüsen sind verschiedene Strömungsquerschnitte bzw. Öffnungsdurchmesser denkbar. Dies kann beispielsweise Öffnungsdurchmesser an den einzelnen Auslassöffnungen von (effektiv) 1.0 mm (Millimeter), 2.0 mm, 3.0 mm und dergleichen betreffen. Auch kann es Variationen hinsichtlich der Anzahl der Auslassöffnungen pro Düse geben. Ferner ist es vorstellbar, auch die Form der Auslassöffnungen zu variieren. Dies kann kreisrunde Gestaltungen, abgeflachte Gestaltungen, ovale Gestaltungen, usw. umfassen.

Gemäß einer weiteren beispielhaften Ausgestaltung der Düsenanordnung sind die KSS-Düsen aus einem Werkstoff hergestellt, der eine additive Fertigung mit hoher Oberflächengüte erlaubt, die möglichst ohne Nachbearbeitung erzielbar ist. Die vorstehend erläuterte Variantenbildung wird hierdurch deutlich vereinfacht, da es nicht erforderlich ist, für jede Variante ein neues Werkzeug vorzusehen.

Gemäß einer weiteren beispielhaften Ausgestaltung der Düsenanordnung sind die Düsen mittels Stereolithografie hergestellt, wobei die Düsen insbesondere Polyacrylate, etwa PMMA oder auf Basis von PMMA, umfassen oder aus diesen bestehen, und wobei Fluidkanäle in den Düsen ohne abtragende oder glättende Nachbearbeitung additiv gefertigt sind. Die Stereolithografie erlaubt die Herstellung filigraner Bauteile mit guter Oberflächengüte.

Gemäß einer weiteren beispielhaften Ausgestaltung der Düsenanordnung ist der Verteilerblock mittels selektiven Lasersinterns hergestellt, wobei der Verteilerblock insbesondere Polyamide umfasst oder aus diesen besteht, und wobei Fluidkanäle im Verteilerblock ohne abtragende oder glättende Nachbearbeitung additiv gefertigt sind. Das selektive Lasersintern erlaubt eine hohe Fertigungsleistung/Auftragsleistung, also eine schnelle Herstellung des Verteilerblocks, der deutlich größer als die (einzelnen) Düsen gestaltet ist.

Gemäß einem weiteren Aspekt betrifft die vorliegende Offenbarung eine Werkzeugmaschine, insbesondere eine Schleifmaschine, mit einer Düsenanordnung gemäß einem der hierin genannten Ausführungsbeispiele, wobei die Düsenanordnung einen KSS-Sensor aufweist, wobei die Werkzeugmaschine ferner eine KSS-Versorgung mit einer Pumpe, insbesondere einer frequenzgesteuerten Pumpe, aufweist oder mit dieser gekoppelt ist, wobei die Pumpe über eine Versorgungsleitung mit dem Eingang des Verteilerblocks verbunden ist, und wobei die Werkzeugmaschine ferner eine Steuereinrichtung aufweist, die Signale des KSS-Sensors auswertet und die KSS-Versorgung auf dieser Basis betreibt, um eine gewünschte Fluidmenge auszubringen.

Auf diese Weise wird die Aufgabe der Erfindung vollkommen gelöst.

Die Steuereinrichtung für die KSS-Versorgung kann Bestandteil einer (globalen) Steuereinrichtung der Werkzeugmaschine sein. Alternativ kann auch ein separater Steuerkreis für die KSS-Versorgung vorgesehen sein. Für die Steuereinrichtung ist eine Pumpenkennlinie bzw. sind Betriebsparameter und Kennwerte der Pumpe im Speicher hinterlegt. Bei der Pumpe kann es sich etwa um eine frequenzgesteuerte Pumpe handeln. Die Werkzeugmaschine kann einen KSS-Kreislauf aufweisen, der auch ein Auffangen sowie eine Rückgewinnung des Kühlschmierstoffes umfasst. Es versteht sich, dass derartige Anlagen für die KSS-Versorgung auch übergeordnet gestaltet sein können und beispielsweise eine Mehrzahl von Werkzeugmaschinen abdecken.

Eine alternative Ausführungsform geht dahin, die Steuerung über ein Regulierventil vorzunehmen. Auch auf diese Weise lässt sich die KSS-Versorgung auf Basis des Sensorsignals fein regulieren. Gemäß dieser Ausführungsform ist es möglich, eine konstant oder im Wesentlichen konstant arbeitende Pumpe zu verwenden.

Gemäß einer weiteren beispielhaften Ausgestaltung der Werkzeugmaschine ist die Düsenanordnung an einer Werkzeugeinheit relativ zur Werkzeugeinheit verfahrbar aufgenommen. Bei einer als Schleifmaschine ausgestalteten Werkzeugmaschine ist es von Vorteil, wenn die Düsenanordnung relativ zum Scheibenumfang einer Schleifscheibe verfahrbar ist. Zu diesem Zweck kann ein Antrieb vorgesehen sein, der die Düsenanordnung, insbesondere den Verteilerblock mit daran aufgenommenen Düsen, bewegen kann, um dem Werkzeugverschleiß, insbesondere dem Schleifscheibenverschleiß, zu folgen. Auf diese Weise wird sichergestellt, dass auch bei einem sich abnutzenden Werkzeug eine optimale KSS-Versorgung gewährleistet ist.

Gemäß einem weiteren Aspekt betrifft die vorliegende Offenbarung eine Verwendung eines Düsensatzes zur Bildung einer Düsenanordnung, insbesondere gemäß einem der hierin beschriebenen Ausführungsbeispiele, für eine Werkzeugmaschine zur KSS-Versorgung, wobei der Düsensatz zumindest eine erste additiv gefertigte Düse eines ersten Düsentyps, und zumindest eine zweite additiv gefertigte Düse eines zweiten Düsentyps aufweist, wobei sich der erste Düsentyp und der zweite Düsentyp hinsichtlich der Anordnung ihrer Auslassöffnungen und/oder der effektiven Strömungsquerschnitte unterscheiden

Mit anderen Worten kann ein Baukasten bzw. Teilesatz definiert werden, der beispielsweise 5 bis 15 verschiedene Typen von Düsen aufweist, die sinnfällig miteinander kombiniert werden können. Die verschiedenen Düsentypen weisen identisch gestaltete Anschlussstutzen auf. Dies vereinfacht den Austausch bzw. die Bildung einer gewünschten Düsenanordnung auf Basis des gegebenen Baukastens bzw. Teilesatzes.

Gemäß einem weiteren Aspekt der Offenbarung wird die Aufgabe der Erfindung ferner gelöst durch eine digitale Datenverkörperung nach Anspruch 15.

Die digitale Datenverkörperung kann Teile der Düsenanordnung betreffen, wobei die Datenverkörperung vorzugsweise die gesamte Düsenanordnung abbildet. Die digitale Datenverkörperung kann Bestandteil oder Basis eines Programmcodes einer Datei bzw. eines Computerprogramms sein, das, wenn es einer numerisch gesteuerten additiven Fertigungsanlage zugeführt und dort ausgeführt wird, eine Reproduktion bzw. Herstellung der Komponente mehrerer Komponenten der Düsenanordnung ermöglicht.

Das CAD-basierte Verfahren kann allgemein auch als numerisch gestütztes Verfahren bezeichnet werden. Übliche additive Fertigungsverfahren können auch als generative Fertigungsverfahren bezeichnet werden. Eine umgangssprachliche Bezeichnung ist 3D-Druck.

Gemäß einem weiteren Aspekt der Offenbarung wird die Aufgabe der Erfindung ferner gelöst durch eine Datensignal, das zur Erzeugung einer Widergabe einer Datenverkörperung geeignet ist, wobei das Datensignal Daten enthält, die zur Herstellung einer Düsenanordnung gemäß zumindest einem der hierin genannten Aspekte mit einer Vorrichtung zur additiven Fertigung geeignet ist.

Ein weiterer Aspekt der Offenbarung bezieht sich auf ein Verfahren zur Herstellung einer Düsenanordnung, umfassend die folgenden Schritte:
- Bereitstellung einer digitalen Datenverkörperung, insbesondere einer CAD-Datenverkörperung, zumindest einer Komponente einer Düsenanordnung, vorzugsweise der gesamten Düsenanordnung, gemäß zumindest einem hierin genannten Aspekt, und
- Herstellung zumindest einer Komponente der Düsenanordnung, vorzugsweise zumindest des Verteilerblocks oder zumindest einer Düse, mittels eines Verfahrens zur additiven Fertigung, auf Basis der digitalen Datenverkörperung.

Dem Schritt der Bereitstellung kann ein Schritt vorgeschaltet sein, der eine Modellierung der Datenverkörperung umfasst. Dies kann mit einem Scan bzw. einer Vermessung eines realen Modells einhergehen. Ferner kann die Modellierung eine Eingabe entsprechender Parameter in einem CAD-Programm beinhalten.

Dem Schritt der Modellierung und dem Schritt der Bereitstellung kann ein Upload oder Transfer der Datenverkörperung bzw. eines ausführbaren Computerprogramms bzw. einer Datei in einer Interpretersprache, die die Datenverkörperung enthält, zwischengeschaltet sein. Auf diese Weise kann ein Transfer von einem Rechner-Arbeitsplatz hin zu einem Server oder einer Plattform erfolgen.

Der Schritt der Bereitstellung der Datenverkörperung kann beispielsweise die Bereitstellung in einem Portal oder einer Datenbank umfassen, wobei das Portal oder die Datenbank über das Internet oder einen vergleichbaren Kanal zugänglich sind. Die Datenverkörperung kann zum Download bereitstehen und auf diese Weise verteilt werden.

Der Schritt der Herstellung kann eine Umwandlung oder Compilierung der Datenverkörperung in ein Datenformat umfassen, das für eine aktuell genutzte Fertigungseinrichtung interpretierbar und verarbeitbar ist.

Weitere Merkmale und Vorteile der Erfindung ergeben sich aus der nachfolgenden Beschreibung und Erläuterung mehrerer beispielhafter Ausführungsbeispiele unter Bezugnahme auf die Zeichnungen. Es zeigen:
- Fig. 1: eine perspektivische Ansicht einer als Schleifmaschine ausgebildeten Werkzeugmaschine mit einer Einhausung, die teilweise gebrochen dargestellt ist;
- Fig. 2: eine weitere perspektivische Ansicht einer Werkzeugmaschine ohne Einhausung;
- Fig. 3: eine schematische Blockdarstellung von Komponenten einer Kühlschmiermittelversorgungseinrichtung zur Versorgung mit Kühlschmierstoffen;
- Fig. 4: eine Ansicht einer Mündungsseite einer Düsenanordnung zur KSS-Versorgung bei Werkzeugmaschinen;
- Fig. 5: eine frontale Ansicht der Anordnung gemäß Fig. 4;
- Fig. 6: eine explodierte perspektivische Darstellung einer Düsenanordnung, die Düsen aus einem Düsensatz umfasst;
- Fig. 7: eine perspektivische, geschnittene Darstellung eines Verteilerblocks für eine Düsenanordnung zur Veranschaulichung einer Strömungsführungskontur;
- Fig. 8: eine weitere perspektivische Darstellung der Gestaltung der Strömungsführungskontur gemäß Fig. 7, in einer von der Darstellung gemäß Fig. 7 abweichenden Orientierung;
- Fig. 9: eine rückwärtige perspektivische Ansicht einer Düse mit einem Anschlussstutzen;
- Fig. 10: eine teilweise geschnittene Ansicht der Düse gemäß Fig. 9 zur Veranschaulichung einer Strömungsführungskontur;
- Fig. 11: eine frontale perspektivische Ansicht einer Darstellung der Strömungsführungskontur einer Schulterdüse;
- Fig. 12: eine explodierte seitliche Teilansicht einer Düsenanordnung mit einer Düse, die an einem Sitz eines Verteilermoduls aufnehmbar ist;
- Fig. 13: eine vergrößerte Detailansicht der Darstellung gemäß Fig. 12;
- Fig. 14: eine teilweise geschnittene Darstellung der Anordnung gemäß Fig. 12 im gefügten Zustand; und
- Fig. 15: eine weitere geschnittene Darstellung der Anordnung gemäß Fig. 12 im gefügten Zustand.

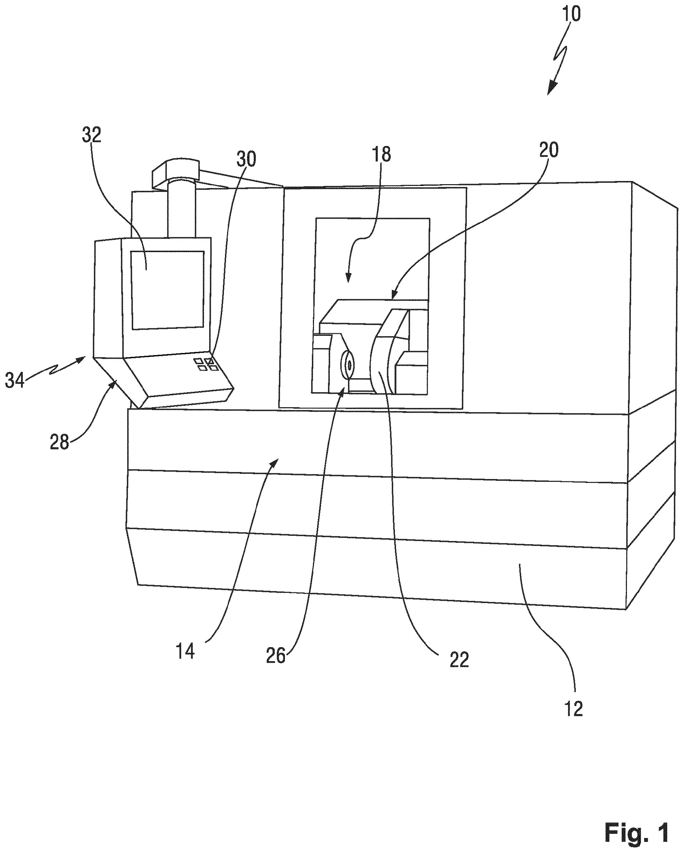

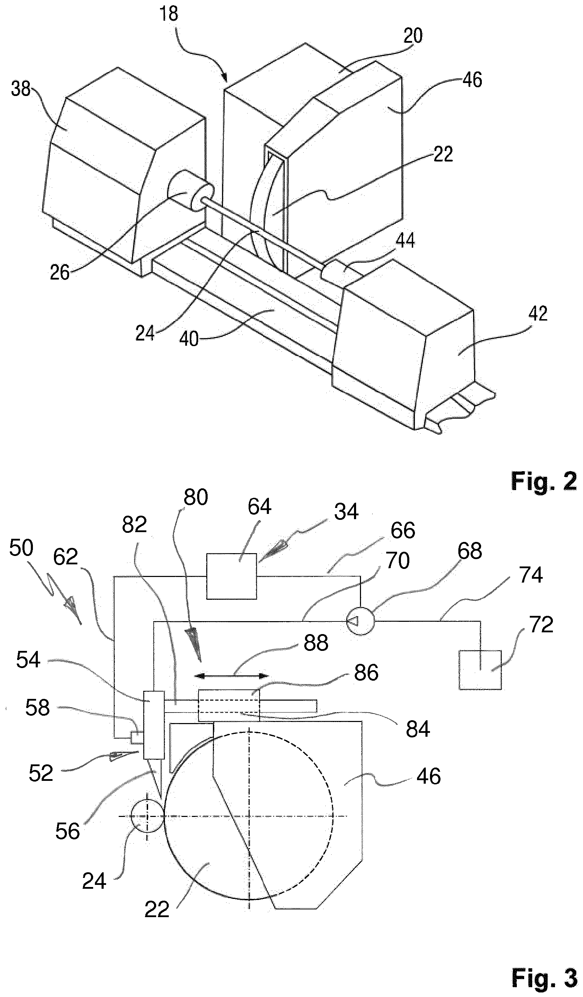

In Fig. 1 ist eine Werkzeugmaschine perspektivisch dargestellt und insgesamt mit 10 bezeichnet. Fig. 2 zeigt exemplarisch eine korrespondierende Draufsicht der Werkzeugmaschine 10 gemäß Fig. 1, wobei aus Veranschaulichungsgründen verschiedene Komponenten nicht dargestellt sind.

Die Werkzeugmaschine 10 ist vorliegend als Schleifmaschine ausgebildet, insbesondere als Rundschleifmaschine, allgemein auch als Horizontalschleifmaschine. Die Werkzeugmaschine 10 weist ein Maschinenbett 12 sowie eine Einhausung 14 auf, die als Gehäuse fungiert.

Die Einhausung 14 definiert dabei einen Prozessraum, der vorzugsweise nach außen abgeschlossen ist oder abschließbar ist. Die Einhausung 14 erlaubt insbesondere bei automatisierten Bearbeitungsvorgängen eine sichere Abgrenzung des Prozessraums der Werkzeugmaschine 10. Auf diese Weise kann grundsätzlich die von beweglichen Komponenten ausgehende Gefahr minimiert werden. Ferner kann ein unerwünschter Austritt von Schmiermittel, Kühlflüssigkeit, Spänen oder beispielsweise Funken in die Umgebung unterbunden werden. Die Einhausung 14 kann in geeigneter Weise mit Türen oder Klappen versehen sein, um den Prozessraum der Werkzeugmaschine 10 zugänglich zu machen.

Bei besonderen Betriebsmodi kann es erforderlich sein, das Sichtfenster als eine Art Schutztür auszubilden, um den Innenraum der Werkzeugmaschine durch einen Bediener von außen erreichbar zu machen. Zu diesem Zweck kann das Sichtfenster beispielhaft seitlich verschoben bzw. verschwenkt werden, um eine zuvor verschlossene Öffnung freizugeben. Betriebsmodi, die einen Zugang in den Innenraum der Werkzeugmaschine 10 erforderlich machen, können beispielsweise Rüstvorgänge, Einrichtvorgänge, Abrichtvorgänge oder allgemein Werkzeugwechsel- bzw. Werkstückwechselvorgänge sein. Es versteht sich, dass abhängig von dem Automatisierungsgrad der Werkzeugmaschine 10 verschiedene Betriebsmodi einen manuellen Zugang in den Innenraum der Werkezugmaschine 10 erforderlich machen können.

In Fig. 1 ist ferner im Innenraum der Werkzeugmaschine 10 eine Werkzeugeinheit 18 mit einem Spindelkopf 20 angedeutet. Am Spindelkopf 20 ist ein Werkzeug 22 aufgenommen. Bei diesem Werkzeug 22 kann es sich insbesondere um ein Schleifwerkzeug, vorzugsweise um eine Schleifscheibe handeln.

Die Werkzeugmaschine 10 weist zudem eine Werkstückaufnahme 26 auf, die zur Aufnahme eines Werkstücks 24 ausgebildet ist. Aus Gründen der Übersicht ist in Fig. 1 kein Werkstück 24 dargestellt. Der Spindelkopf 20 kann zur Bearbeitung eines Werkstücks relativ zur Werkstückaufnahme 26 regelmäßig in zumindest zwei Raumrichtungen verfahren werden. Beim Einstechschleifen genügt es, wenn der Spindelkopf 20 in zumindest einer Raumrichtung verfahrbar ist.

Werkzeugmaschinen 10, insbesondere Schleifmaschinen, weisen üblicherweise eine Bedienerschnittstelle 28 auf, die außerhalb des Innenraums der Werkzeugmaschine 10 angeordnet ist. Folglich kann ein Bediener die Werkzeugmaschine 10 steuern, programmieren, regeln und/oder beispielsweise Diagnosen durchführen, ohne mit dem Innenraum der Werkzeugmaschine 10 in Kontakt zu kommen. Bei der Bedienerschnittstelle 28 handelt es sich vorzugsweise um eine Bedieneinheit, die zumindest eine Eingabeeinheit 30 zur Eingabe von Steuerbefehlen aufweist. Die Bedienerschnittstelle 28 kann zudem eine Ausgabeeinheit 32, beispielsweise einen Bildschirm aufweisen. Ferner ist es denkbar, einen sogenannten Touchscreen zu verwenden, also eine kombinierte Eingabe- und Ausgabeeinheit.

Ferner ist in Fig. 1 mit 34 eine Steuereinrichtung angedeutet. Die Steuereinrichtung 34 steuert die Werkzeugmaschine 10, insbesondere deren Antriebe, Sensoren, Aktoren, etc. Die Steuereinrichtung 34 muss nicht zwingend (baulich) in die Bedienerschnittstelle 28 integriert sein. Die Steuereinrichtung 34 kann als verteilte Steuereinrichtung ausgebildet sein. Die Werkzeugmaschine 10 kann auch über externe Steuereinrichtungen angesteuert werden, die über Signalleitungen angekoppelt sind.

Fig. 2 zeigt eine vereinfachte perspektivische Draufsicht einer Werkzeugmaschine 10, die grundsätzlich der Werkzeugmaschine 10 gemäß Fig. 1 entsprechen oder zumindest ähnlich gestaltet sein kann. Aus Gründen der Übersichtlichkeit weist die in Fig. 2 dargestellte Ausgestaltung keine Einhausung 14 sowie keine Bedienerschnittstelle 28 auf.

In Fig. 2 ist vereinfacht die Werkstückaufnahme 26 dargestellt. Diese ist an einem Werkstückspindelstock oder Werkstückträger 38 angeordnet, der über einen Schlitten entlang einer Führung 40 axial verfahren werden kann. Zudem ist es denkbar, an einem dem Werkstückträger 38 gegenüberliegenden axialen Ende der Führung 40 einen weiteren Werkstückträger bzw. Reitstock 42 mit einem weiteren Werkstückhalter 44 vorzusehen, um so das Werkstück 24 zur Bearbeitung dem Werkzeug 20 zwischen den beiden Werkstückhaltern 26 und 44 rotierbar zu fixieren. Die Werkzeugmaschine 10 gemäß Fig. 2 kann auch als T-Schlittenmaschine bezeichnet werden. Alternativ gibt es beispielsweise Kreuzschlittenmaschinen, etc.

Die Werkzeugeinheit 18 weist im vorliegenden Fall ferner eine Schutzhaube oder Werkzeugumhausung 46 auf. Diese Werkzeugumhausung 46 ist an dem Spindelkopf 20 angeordnet und umgibt zumindest teilweise das Werkzeug 22.

Die in den Figuren 1 und 2 veranschaulichte Werkzeugmaschine 10 steht exemplarisch für verschiedene Ausgestaltungen von Werkzeugmaschinen, bei denen ein Bedarf an einer Versorgung mit Kühlschmierstoffen (KSS) besteht.

Fig. 3 zeigt anhand einer schematischen Blockdarstellung eine insgesamt mit 50 bezeichnete Kühlschmiermittelversorgungseinrichtung oder Kühlschmierstoffversorgungseinrichtung (KSS-Versorgungseinrichtung). Die KSS-Versorgungseinrichtung 50 weist eine Düsenanordnung 52 auf, welche einen Verteilerblock 54 sowie zumindest eine Düse 56 aufweist. Die Düse 56 ist mit ihrer Austrittsöffnung auf einen Zwischenraum zwischen dem Werkzeug 22 und dem Werkstück 24 gerichtet. Kühlschmierstoffe werden von der KSS-Versorgungseinrichtung 50 durch die Düse 56 in diesem Bereich, in dem die Bearbeitung stattfindet, eingebracht. Auf diese Weise kann überschüssige Wärme abgeführt werden. Ferner können Späne bzw. kann Werkzeugabrieb abgeführt werden. Daneben kann die Versorgung mit den Kühlschmierstoffen dazu genutzt werden, günstige Reibungsverhältnisse zwischen dem Werkzeug 22 und dem Werkstück 24 herbeizuführen.

Die Düsenanordnung 52 weist ferner einen KSS-Sensor 58 auf, der an den Verteilerblock 54 angeflanscht ist. Bei dem Sensor 58 kann es sich beispielsweise um einen Drucksensor, etwa um einen Staudrucksensor handeln. Allgemein kann der Sensor 58 auch als Durchflusssensor gestaltet sein. Der Sensor 58 ist an einer Sensoraufnahme des Verteilerblocks 54 aufgenommen.

Der Sensor 58 ist über eine Steuerleitung 62 mit einer KSS-Regelung 64 verbunden. Die KSS-Regelung 64 kann als Bestandteil der (übergeordneten) Steuereinrichtung 34 der Werkzeugmaschine 10 oder als separate Einheit ausgeführt sein. Die KSS-Regelung ist über eine Steuerleitung 66 mit einer Pumpe 68 zur Druckerzeugung verbunden. Vorzugsweise handelt es sich bei der Pumpe 68 um eine regelbare Pumpe. Somit kann die KSS-Regelung 64 die Pumpe 68 in Abhängigkeit von dem vom Sensor 58 übermittelten Signal ansteuern. Die Pumpe 68 ist über eine Leitung 70 mit einem Eingang am Verteilerblock 54 verbunden. Ferner ist die Pumpe 68 über eine mit 74 bezeichnete Leitung mit einem Reservoir 72 verbunden.

Es steht sich, dass die KSS-Versorgungseinrichtung 50 auch Maßnahmen zum Auffangen sowie zur Reinigung/zum Recycling von Kühlschmierstoffen aufweisen kann. Demgemäß kann auch ein KSS-Kreislauf vorgesehen sein.

Die Düsenanordnung 52 ist an einer Düsenvorschubeinheit 80 aufgenommen. Düsenvorschubeinheit 80 umfasst einen Träger 82, der die Düsenanordnung 52 trägt, insbesondere den Verteilerblock 54. Der Träger 82 ist an einer Führung 84, insbesondere einer Längsführung aufgenommen. Die Führung 84 ist beispielsweise an der Werkzeugeinhausung 46 oder anderweitig am Spindelkopf 20 aufgenommen. Die Düsenvorschubeinheit 80 weist einen Antrieb 86 auf, um den Träger 82 und somit die Düsenanordnung 52 in einer mit 88 bezeichneten Richtung vor und zurück zu verfahren. Auf diese Weise kann die Düsenanordnung 52 in geeigneter Weise nachgeführt werden, wenn sich am Werkzeug 22 ein Abrieb bzw. eine Durchmesserreduktion ergibt.

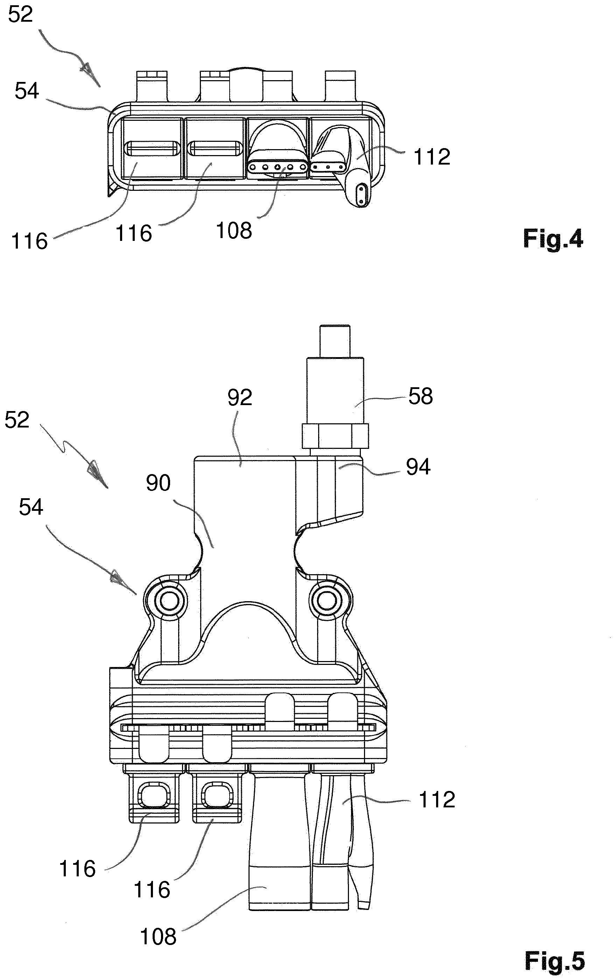

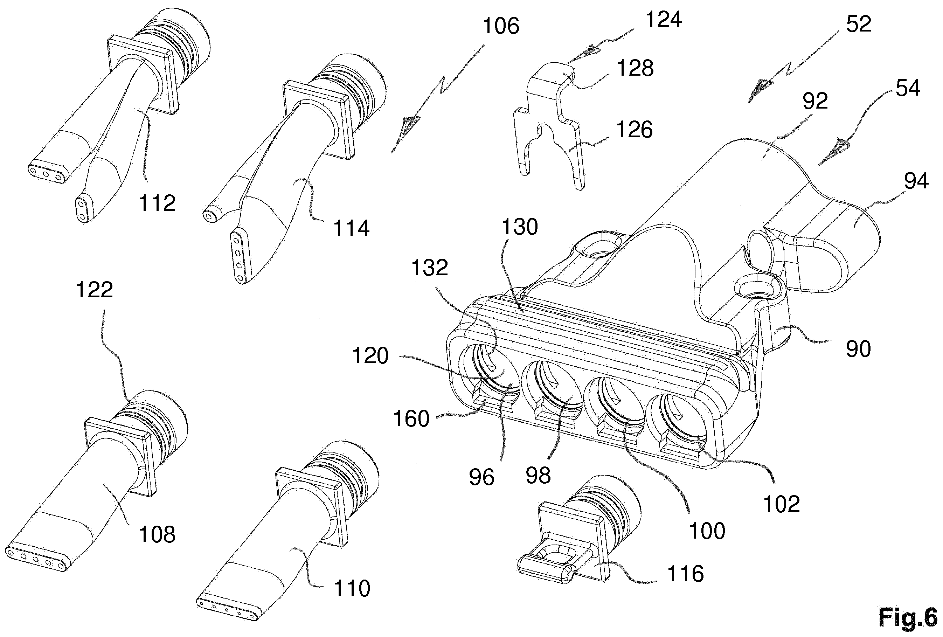

Fig. 4 und Fig. 5 zeigen eine frontale Ansicht sowie eine korrespondierende Seitenansicht einer Ausführungsform einer Düsenanordnung 52 zur Verwendung bei einer KSS-Versorgungseinrichtung 50 bei einer Werkzeugmaschine 10. Ergänzend zeigt Fig. 6 eine explodierte Darstellung der Komponenten einer Düsenanordnung 52.

Die Düsenanordnung 52 ist mit einem Verteilerblock 54 versehen. Ein Gehäuse des Verteilerblocks 54 ist in Fig. 5 mit 90 bezeichnet. Vorzugsweise ist zumindest das Gehäuse 90 des Verteilerblocks 54 integral und additiv gefertigt. Der Verteilerblock 54 weist einen Eingang 92 für eine Versorgungsleitung (vergleiche Leitung 70 in Fig. 3) sowie einen Anschluss 94 für einen KSS-Sensor 58 auf. Ferner weist der Verteilerblock 54 mehrere Ausgänge 96, 98, 100, 102 auf, hierzu wird auf die explodierte Darstellung eines Ausführungsbeispiels der Düsenanordnung 52 in Fig. 6 verwiesen.

In Fig. 6 ist ferner mit 106 ein Düsensatz angedeutet, der Düsen 108, 110, 112, 114 verschiedener Düsentypen umfasst. Die Düsen 108, 110, 112, 114 können an den Ausgängen 96, 98, 100, 102 des Verteilerblocks 54 aufgenommen werden. Es versteht sich, dass der Düsensatz 106 weitere Typen sowie entsprechende Mengen an Düsen umfassen kann, um diverse Konfigurationen der Düsenanordnung 52 zu erzeugen.

Die Düsenanordnung 52 weist ferner auch Blindstopfen 116 auf, die dazu nutzbar sind, die Ausgänge 96, 98, 100, 102 des Verteilerblocks 54 bedarfsweise dichtend zu verschließen. Somit können die Ausgänge 96, 98, 100, 102 wahlweise deaktiviert werden.

Die frontale Darstellung der Düsenanordnung 52 in Fig. 4 zeigt, dass an den Ausgängen 96, 98, 100, 102 des Verteilerblocks 54 zwei Blindstopfen 116 sowie eine erste Düse 108 und eine weitere Düse 112 aufgenommen sind. Mithin zeigt Fig. 4 eine beispielhafte Konfiguration der Düsenanordnung 52, die unter Nutzung des Düsensatzes 106 (Fig. 6) erzeugbar ist.

Die in Fig. 6 mit 108, 110 bezeichneten Düsen können auch als gerade Düsen bezeichnet werden. Die in Fig. 6 mit 112, 114 bezeichneten Düsen können auch als Schulterdüsen bezeichnet werden. Die Schulterdüsen 112,114 weisen jeweils zwei Reihen von Ausgangsöffnungen auf, welche zueinander (winklig) versetzt sind. Die Schulterdüsen 112, 114 sind beispielsweise für die Bearbeitung sogenannter Schulterkonturen bei Werkstücken geeignet. Die geraden Düsen 108,110 weisen jeweils eine (einzige) Reihe von Ausgangsöffnungen auf. Beispielsweise unterscheiden sich die Düsen 108,110 hinsichtlich ihrer effektiven Strömungsquerschnitte bei den Ausgangsöffnungen voneinander.

Die in Fig. 6 gezeigten Düsen 108, 110, 112, 114 stehen stellvertretend für eine definierte Variantenvielfalt des Düsensatzes, die zur Bildung der Düsenanordnung 52 nutzbar ist.

Die Düsen 108, 110, 112, 114 sowie der Blindstopfen 116 sind an einem Sitz 120 des jeweiligen Ausgangs 96, 98, 100, 102 aufnehmbar bzw. in diesen einführbar. Zu diesem Zweck weisen die Düsen 108, 110, 112, 114 sowie der Blindstopfen 116 jeweils einen Anschlussstutzen 122 auf, der an den Aufnahmesitz oder Sitz 120 angepasst ist.

Die Lagesicherung der Düsen 108, 110, 112, 114 bzw. des Blindstopfens 116 am Verteilerblock 54 wird über sogenannte Sicherungsschieber 124 gewährleistet. Die Sicherungsschieber 124 weisen eine Gabelkontur 126 sowie ein Griffstück 128 auf. Die Gabelkontor 126 ist dazu ausgebildet, im montierten Zustand die Düsen 108, 110, 112, 114 bzw. den Blindstopfen 116 im Bereich des Anschlussstutzens 122 formschlüssig zu umgreifen, um ein Lösen vom Verteilerblock 54 zu verhindern. Gemäß der in Fig. 6 gezeigten Ausführungsform kann der Sicherungsschieber 124 um 180° gedreht werden, so dass das Griffstück 128 einmal dem Verteilerblock 54 zugewandt und einmal hiervon abgewandt ist.

Am Verteilerblock 54 ist ein Führungsschlitz 130 ausgebildet, durch den die Sicherungsschieber 124 jeweils einem Sitz 120 der Ausgänge 96, 98, 100, 102 zuführbar sind. Die Sicherungsschieber 124 werden jeweils radial zugeführt, bezogen auf eine Längserstreckung des Sitzes 120 bzw. des Anschlussstutzens 122. In Fig. 6 ist ferner mit 132 ein Aufnahmesitz für die Sicherungsschieber 124 im jeweiligen Sitz bezeichnet. Bei dem Aufnahmesitz 132 handelt es sich jeweils um eine seitliche Vertiefung in der Umfangswand des entsprechenden Sitzes 120. Somit kann der Sicherungsschieber 124 mit seiner Gabelkontur 126 gleichzeitig in entsprechende Ausnehmungen am Sitz 120 sowie am Anschlussstutzen 122 einfahren, um die gewünschte axiale Lagesicherung zu bewerkstelligen.

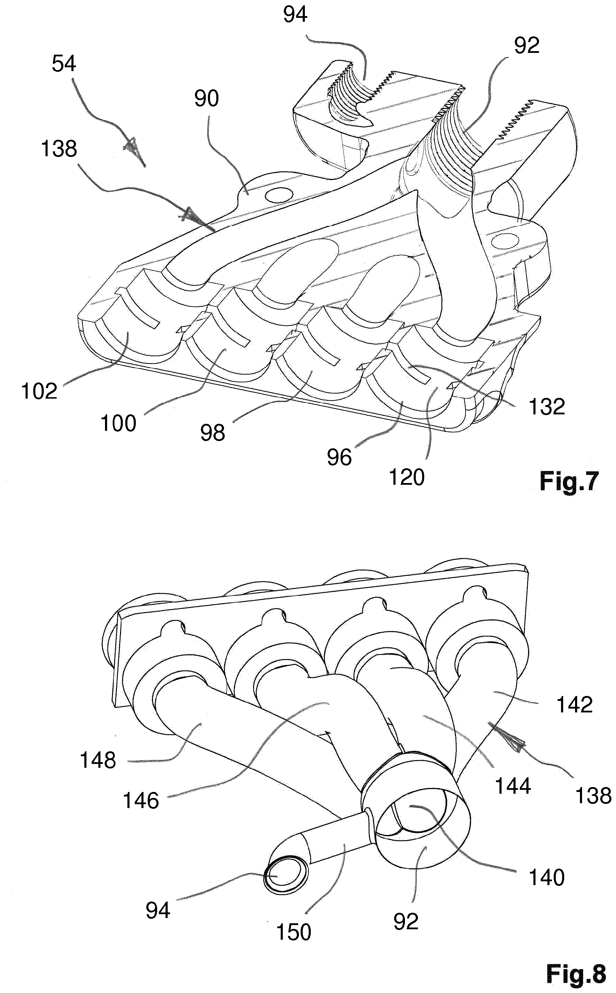

Mit Verweis auf Fig. 7 sowie Fig. 8 wird eine beispielhafte Gestaltung des Verteilerblocks 54 näher veranschaulicht. Der Verteilerblock 54 weist eine interne Strömungsführungskontur 138 auf. Fig. 7 veranschaulicht die Strömungsführungskontur 138 anhand eines Schnittes durch den Verteilerblock 54. Fig. 8 veranschaulicht Flächen, die die Strömungsführungskontur 138 bilden.

Die Darstellungen gemäß Fig. 7 und Fig. 8 zeigen den Eingang 92, den Anschluss 94 sowie die Ausgänge 96, 98, 100,102. Ferner zeigt die Darstellung in Fig. 7 den Aufnahmesitz 132 im Sitz 120 des jeweiligen Ausgangs 96, 98, 100, 102. Fig. 8 veranschaulicht einerseits eine Verzweigung 140 des Strömungspfades. Ferner zeigt Fig. 8 die Lage und Gestaltung von Strömungskanälen 142, 144, 146, 148, die sich zwischen dem Eingang 92 und den Ausgängen 96, 98, 100,102 erstrecken. Ein Verbindungskanal 150 erstreckt sich zwischen dem Eingang 92 und dem Anschluss 94 für den KSS-Sensor 58.

Fig. 7 und Fig. 8 zeigen anschaulich, dass die Strömungsführungskontur 138 gekrümmte Strömungspfade und strömungsgünstig gestaltete Übergänge/Umlenkungen umfasst. Die Strömungsführungskontur 138 kann mittels konventioneller abtragender Herstellverfahren nicht mit vertretbarem Aufwand hergestellt werden. Ferner zeigt insbesondere Fig. 8, dass das Gehäuse 90 des Verteilerblocks 54 integral und einstückig gestaltet ist und dabei eine Vielzahl von Funktionen bzw. Funktionselementen in sich integriert.

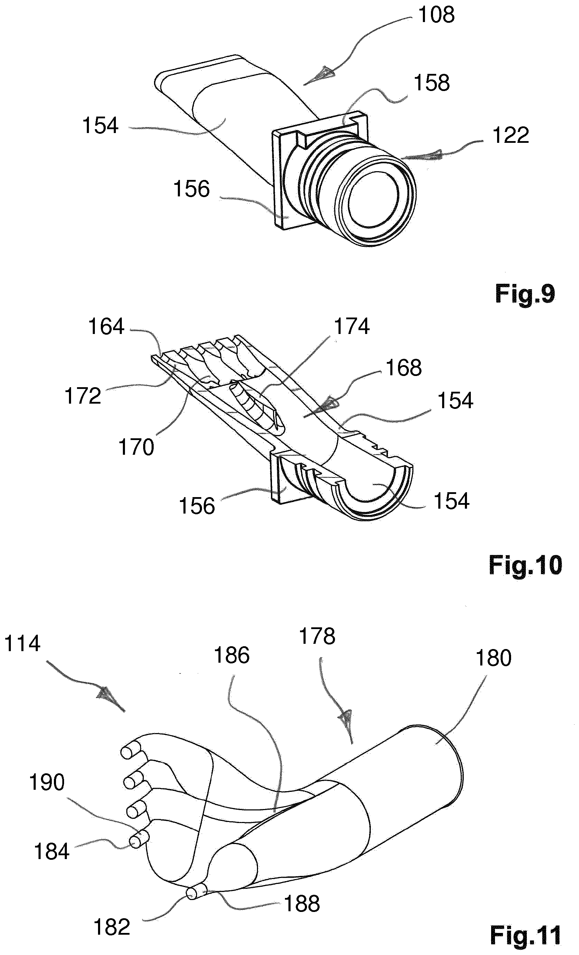

In ähnlicher Weise veranschaulichen Fig. 9 und Fig. 10 eine beispielhafte Ausgestaltung einer mit 108 bezeichneten Düse des Düsensatzes 106. Die Düse 108 ist als gerade Düse gestaltet. Die Düse 108 weist ein Gehäuse 154 auf. Das Gehäuse 154 ist integral und einstückig gestaltet. Das Gehäuse 154 stellt eine Mehrzahl von Funktionen bzw. Funktionselementen bereit.

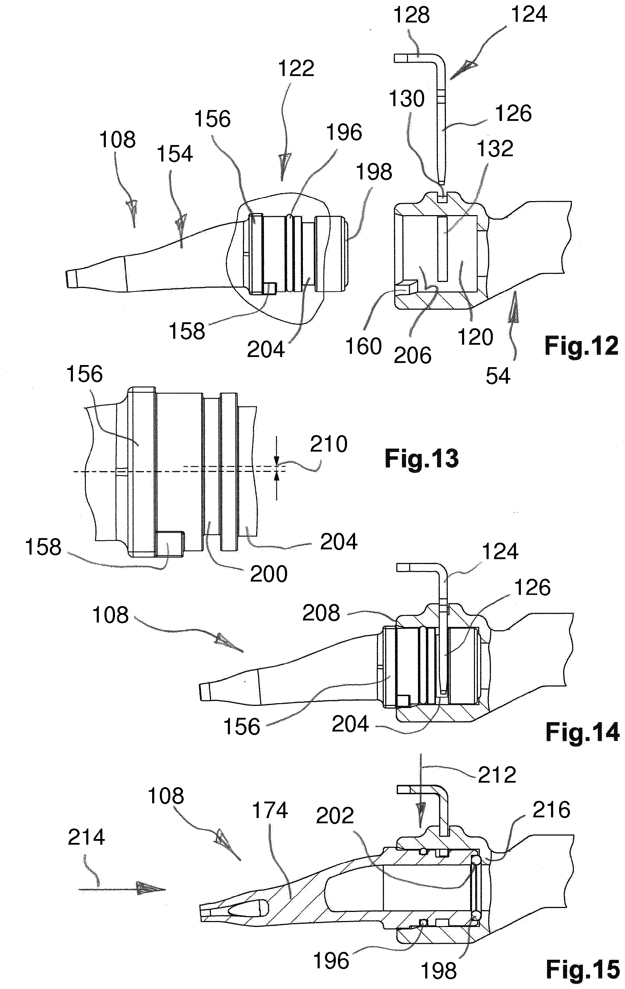

Dies umfasst beispielsweise eine Anschlagplatte 156 sowie ein Lagesicherungselement 158, das dem Anschlussstutzen 122 zugewandt ist. Die Anschlagplatte 156 definiert eine axiale Lage der Düse 108 im montierten Zustand am Sitz 120. Das Lagesicherungselement 158 definiert eine Drehlage der Düse 108 im montierten Zustand am Sitz 120, vergleiche hierzu die Aufnahme 160 in Fig. 6 sowie in Fig. 12, die das Gegenstück bildet.

Die Düse 108 weist ferner einen Eingang 162 sowie eine Mehrzahl von Ausgängen 164 auf. Mit anderen Worten ist die Düse 108 aufgefächert. Die Ausgänge 164 sind in der in den Figuren 9 und 10 veranschaulichten Ausführungsform der Düse 108 in einer Reihe nebeneinander angeordnet. Im Ausführungsbeispiel sind fünf Ausgänge 164 nebeneinander positioniert.

Im Gehäuse 154 erstreckt sich eine Strömungsführungskontur 168, vergleiche insbesondere Fig. 10. Die Strömungsführungskontur 168 umfasst eine Verzweigung 170 zwischen dem einen Eingang 162 und der Mehrzahl von Ausgängen 164. Die Verzweigung 170 bildet für jeden der Ausgänge 164 einen Strömungskanal 172. Durch die Ausgänge 164 können die Kühlschmierstoffe aus der Düse 108 heraustreten. Ferner enthält die beispielhafte Darstellung in Fig. 10 einen mittig angeordneten Steg 174. Der Steg 174 kann einerseits zur Strömungsführung und andererseits zur Erhöhung der Stabilität des Gehäuses 154 dienen.

Die Strömungsführungskontur 168 im Gehäuse 154 ist strömungsgünstig gestaltet. Die Lage, Gestalt und Orientierung der Strömungskanäle 172 der Strömungsführungskontur 168 kann mittels konventioneller abtragender Herstellverfahren nicht mit vertretbarem Aufwand hergestellt werden. Stattdessen wird vorgeschlagen, das Gehäuse 154 der Düse 108 additiv zu fertigen. Ein geeignetes Herstellverfahren ist beispielsweise die Stereolithografie, wobei Polymethylmethacrylat (PMMA) oder ähnliche Werkstoffe verarbeitet werden. Ein Vorteil dieser Kombination aus Werkstoff und Herstellverfahren ist die gute Oberflächenbeschaffenheit. Daher lassen sich Strömungsverluste entlang der Strömungsführungskontur 168 der Düse 108 minimieren. Die Kühlschmierstoffe können in der gewünschten Menge und mit der gewünschten Geschwindigkeit aus Öffnungen bei den Ausgängen 164 heraustreten. Dies erlaubt eine hochgenau und effiziente Strahlführung

In Ergänzung zu den Darstellungen gemäß Fig. 9 und Fig. 10 veranschaulicht Fig. 11 eine Strömungsführungskontur 178, die beispielsweise der Schulterdüse 114 in Fig. 6 zugeordnet ist. Die Strömungsführungskontur 178 erstreckt sich zwischen einem Eingang 180 sowie zwischen einem ersten Ausgang 182 und zweiten Ausgängen 184. Im Ausgangsbeispiel gemäß Fig. 11 ist lediglich ein einziger erster Ausgang 182 vorgesehen. Es können jedoch auch zwei oder drei solcher Ausgänge 182 vorgesehen sein. Alternativ kann die Anzahl der Ausgänge 184 von der in Fig. 11 gezeigten Anzahl (vier) abweichen und insbesondere auch drei, zwei oder eins betragen. Andere Kombinationen sind denkbar. Die Ausgänge 182 bilden eine erste Reihe. Die Ausgänge 184 bilden eine zweite Reihe. Die Reihen sind um etwa 90° zueinander versetzt. Auf diese Weise eignet sich die Düse 114 zur KSS-Versorgung beim Schulterschleifen.

Die Strömungsführungskontur 178 umfasst eine Verzweigung 186 zwischen den ersten Ausgängen 182 und den zweiten Ausgängen 184. Den ersten Ausgängen182 sind erste Strömungskanäle 188 zugeordnet (in Fig. 11 lediglich ein einziger Strömungskanal 188). Den zweiten Ausgängen 184 sind zweite Strömungskanäle 190 zugeordnet (in Fig. 11 vier Strömungskanäle 190). Auch die Gestaltung in Fig. 11 kann mittels konventioneller abtragender Herstellverfahren nicht mit vertretbarem Aufwand hergestellt werden. Die Strömungsführungskontur 178 wird folglich durch ein additives Herstellverfahren erzeugt, etwa durch die Stereolithografie, wobei Polymethylmethacrylat (PMMA) oder ähnliche Werkstoffe verarbeitet werden. Die Strömungsführungskontur 178 erlaubt mit lediglich einer Düse 114 eine strömungsgünstige Gestaltung und Zuführung von Kühlschmierstoffen für das Schulterschleifen und ähnliche Bearbeitungsverfahren.

Es versteht sich, dass sämtliche der Düsen 108, 110, 112, 114 als Ausgangspunkt für die Ableitung weiterer Varianten betrachtet werden können. Dies betrifft beispielsweise die Anzahl und Lage der jeweiligen Ausgänge sowie sich ergebende effektive Strömungsquerschnitte für die Kühlschmierstoffe. Da die Düsen 108, 110, 112, 114 mittels additiver Verfahren hergestellt werden, ist abgesehen vom konstruktiven Aufwand kein weiterer Aufwand (etwa für die Formherstellung) erforderlich, um weitere Varianten auszubilden. Es wird vorgeschlagen, eine bestimmte Variantenvielfalt an Düsen bereitzustellen und vorzuhalten, auf deren Basis Düsenanordnungen für eine Vielzahl von Anwendungsfällen zusammengestellt werden können.

Mit Bezugnahme auf die Figuren 12 bis 15 werden die Montage und der montierte Zustand einer Düse 108 an einem Sitz 120 an einem Ausgang 96 des Verteilerblocks 54 näher erläutert. Die Düse 108 wird stellvertretend für andere Düsentypen und den Blindstopfen 116 dargestellt.

Fig. 12 zeigt einen Zustand unmittelbar vor der Montage. Die Düse 108 ist bereits mit ihrem Anschlussstutzen 122 mit dem Sitz 120 am Verteilerblock 54 ausgerichtet. Ferner ist der Sicherungsschieber 124 mit dem Führungsschlitz 130 ausgerichtet, der in den Aufnahmesitz 132 übergeht. Die Düse 108 mit dem Anschlussstutzen 122 ist axial in den Sitz 120 einführbar. Der Sicherungsschieber 124 ist radial in Bezug auf den Sitz 120 sowie den Anschlussstutzen 122 einführbar.

Fig. 13 zeigt eine vergrößerte Teilansicht der Düse 108 im Bereich des Anschlussstutzens 122. Der Anschlussstutzen 122 erstreckt sich ausgehend von der Anschlagplatte 156. Ferner ist an der Anschlagplatte 156 das Lagesicherungselement 158 angeordnet, das im gefügten Zustand in die Aufnahme 160 (Fig. 12) einrückt.

Beim Sitz 120 ist eine Einführhilfe 194 in Form einer Schräge oder Rundung vorgesehen. Alternativ oder zusätzlich kann auch eine Einführhilfe beim Anschlussstutzen 122 ausgebildet sein.

Am Anschlussstutzen 122 sitzt ein radial wirksamer Dichtring 196 und ein axial wirksamer Dichtring 198. Der Dichtring 196 sitzt in einem Umfangsbereich des Anschlussstutzens 122. Der Dichtring 198 sitzt an einer frontalen Stirnfläche des Anschlussstutzens 122 in Richtung auf den Sitz 120.

Fig. 13 veranschaulichten anhand einer vergrößerten Darstellung die Lage einer Aufnahmenut 200 für den Dichtring 196. Fig. 15 zeigt in der geschnittenen Darstellung eine Aufnahme 202 für den Dichtring 198. Am Anschlussstutzen 122 ist ferner eine Nut 204 für den Sicherungsschieber ausgebildet, vergleiche Fig. 12. Der Sitz 120 stellt eine Zylinderfläche 206 bereit, in die der Anschlussstutzen 122 zumindest teilweise einführbar ist. Ferner ist auf Seiten des Verteilerblocks 54 ein axialer Anschlag 208 vorgesehen, der durch eine Stirnfläche gebildet ist. Der Anschlag 208 kann die Anschlagplatte 156 der Düse 108 kontaktieren und somit einen axialen Anschlag für die Düse 108 am bzw. im Sitz 120 bereitstellen.

In Fig. 13 ist mit 210 eine Exzentrizität zwischen der Aufnahmenut 200 für den Dichtring 196 und einer Längsachse durch den Anschlussstutzen 122 angedeutet. Die Längsachse des Anschlussstutzens 122 und eine entsprechende Längsachse durch den Sitz 120 sind im gefügten Zustand (vergleiche Fig. 14 und Fig. 15) in Übereinstimmung gebracht. Die Aufnahmenut 200 ist leicht exzentrisch hierzu ausgebildet. Dies bewirkt im montierten Zustand eine radial wirksame Kraft, vergleiche den Pfeil 212 in Fig. 15. Auf diese Weise wird eine definierte Ausrichtung und Orientierung der Düse 108 beziehungsweise sämtlicher Düsen am jeweiligen Sitz 120 bewirkt. Ferner kann die Kraft 212 das Lagesicherungselement 158 noch weiter in die jeweilige Aufnahme 160 drängen.

Ferner veranschaulicht in Fig. 15 ein mit 214 bezeichneter Pfeil eine axial wirksame Kraft. Diese Kraft wird durch das Zusammenspiel aus Sicherungsschieber 124 und entsprechender Aufnahmenut 204 erzeugt. Die Aufnahmenut 204 ist derart gestaltet, dass der Sicherungsschieber 124 im gefügten Zustand (vergleiche Fig. 14 und Fig. 15) eine Vorspannung auf eine Flanke der Aufnahmenut 204 erzeugt, die den axial wirksamen Dichtring 198 in Richtung auf einen inneren axialen Anschlag 216 am Sitz 120 drängt.

## Patentansprüche

1. Modular gestaltete Düsenanordnung (52) für Kühlschmierstoffe (KSS), die Folgendes aufweist:
einen Verteilerblock (54), der einen Eingang (92) und mehrere Ausgänge (96, 98, 100, 102) für ein KSS-Fluid bereitstellt, und
zumindest eine an einem Ausgang (96, 98, 100, 102) aufnehmbare KSS-Düse (56; 108, 110, 112, 114), die aus einem Düsensatz (106) auswählbar ist,
wobei zumindest die zumindest eine Düse (56; 108, 110, 112, 114) additiv gefertigt ist,
wobei die Ausgänge (96, 98, 100, 102) jeweils einen Sitz (120) zur Aufnahme eines Anschlussstutzens (122) der Düse (56; 108, 110, 112, 114) aufweisen,
**dadurch gekennzeichnet,**
**dass** die zumindest eine Düse eine interne Strömungsführungskontur (138, 168, 178) mit gekrümmten Strömungskanälen (142, 144, 146, 148; 172; 188, 190) aufweist,
**dass** im gekoppelten Zustand zwischen dem Sitz (120) und dem Anschlussstutzen (122) eine erste Dichtung (196) und eine zweite Dichtung (198) vorgesehen ist, dass die erste Dichtung (196) als radial wirksame Dichtung und die zweite Dichtung (198) als axial wirksame Dichtung gestaltet ist, und
**dass** am Anschlussstutzen (122) eine Nut (204), insbesondere eine umlaufende Nut, ausgebildet ist, die mit einem Sicherungsschieber (124) zusammenwirkt.

2. Düsenanordnung (52) nach Anspruch 1, wobei sowohl der Verteilerblock (54) als auch die zumindest eine Düse (56; 108, 110, 112, 114) additiv gefertigt sind und eine interne Strömungsführungskontur (138, 168, 178) mit gekrümmten Strömungskanälen (142, 144, 146, 148; 172; 188, 190) aufweisen.

3. Düsenanordnung (52) nach Anspruch 1 oder 2, umfassend eine Mehrzahl von Düsen (56; 108, 110, 112, 114), die jeweils mit einem Ausgang (96, 98, 100, 102) gekoppelt sind.

4. Düsenanordnung (52) nach einem der Ansprüche 1 bis 3, wobei die zumindest eine Düse (56; 108, 110, 112, 114) eine Anschlagplatte (156) aufweist, wobei sich der Anschlussstutzen (122) ausgehend von der Anschlagplatte (156) erstreckt, und wobei an der Anschlagplatte (156) ein Lagesicherungselement (158) angeordnet ist, das im gefügten Zustand in eine Aufnahme (160) am Sitz (120) einrückt und im montierten Zustand eine Drehlage der Düse (56; 108, 110, 112, 114) am Sitz (120) definiert.

5. Düsenanordnung (52) nach einem der Ansprüche 1 bis 4, wobei der Anschlussstutzen (122) die erste Dichtung (196) trägt, die in einer Aufnahmenut (200) angerordnet ist, und wobei die Aufnahmenut (200) vorzugsweise zu einer Längsachse des Anschlussstutzens (122) zumindest leicht versetzt oder exzentrisch hierzu gestaltet ist.

6. Düsenanordnung (52) nach einem der Ansprüche 1 bis 5, wobei die erste Dichtung (196) und die zweite Dichtung (198) Ringdichtungen sind.

7. Düsenanordnung (52) nach einem der Ansprüche 1 bis 6, wobei der Sicherungsschieber (124) im montierten Zustand die Düse (56; 108, 110, 112, 114) axial in den Sitz (120) drängt.

8. Düsenanordnung (52) nach einem der Ansprüche 1 bis 7, wobei Ausgänge (96, 98, 100, 102), die nicht mit einer Düse (56; 108, 110, 112, 114) gekoppelt sind, jeweils durch einen Blindstopfen (116) verschlossen sind.

9. Düsenanordnung (52) nach einem der Ansprüche 1 bis 8, wobei zumindest eine verbaute Düse (56; 108, 110, 112, 114) einen aufgefächerten Fluidpfad aufweist, und/oder wobei die zumindest eine Düse (56; 108, 110, 112, 114) eine Verzweigung (170, 186) aufweist, die eine Mehrzahl von Auslassöffnungen definiert.

10. Düsenanordnung (52) nach einem der Ansprüche 1 bis 9, wobei die zumindest eine Düse (56; 108, 110, 112, 114) zueinander versetzt angeordnete Auslassöffnungen (182, 184) aufweist, die in einer ersten Reihe und einer zweiten hierzu winklig versetzten Reihe angeordnet sind.

11. Düsenanordnung (52) nach einem der Ansprüche 1 bis 10, wobei die Düsen (56; 108, 110, 112, 114) mittels Stereolithografie hergestellt sind, wobei Fluidkanäle in den Düsen (56; 108, 110, 112, 114) ohne abtragende oder glättende Nachbearbeitung additiv gefertigt sind, und wobei die Düsen (56; 108, 110, 112, 114) insbesondere Polyacrylate umfassen oder aus diesen bestehen.

12. Düsenanordnung (52) nach einem der Ansprüche 1 bis 11, wobei der Verteilerblock (54) mittels selektivem Lasersintern hergestellt ist, wobei Fluidkanäle im Verteilerblock (54) ohne abtragende oder glättende Nachbearbeitung additiv gefertigt sind, und wobei der Verteilerblock (54) insbesondere Polyamide umfasst oder aus diesen besteht.

13. Werkzeugmaschine (10), insbesondere Schleifmaschine, mit einer Düsenanordnung (52) nach einem der Ansprüche 1 bis 12, wobei die Düsenanordnung (52) einen KSS-Sensor (58) aufweist, wobei die Werkzeugmaschine ferner eine KSS-Versorgung (50) mit einer Pumpe (68), insbesondere einer frequenzgesteuerten Pumpe, aufweist oder mit dieser gekoppelt ist, wobei die Pumpe (68) über eine Versorgungsleitung (70) mit dem Eingang (92) des Verteilerblocks (54) verbunden ist, wobei die Werkzeugmaschine ferner eine Steuereinrichtung (34, 64) aufweist, die Signale des KSS-Sensors (58) auswertet und die KSS-Versorgung (50) auf dieser Basis betreibt, um eine gewünschte Fluidmenge auszubringen, und wobei die Düsenanordnung (52) an einer Werkzeugeinheit (18) relativ zur Werkzeugeinheit (18), insbesondere relativ zum Scheibenumfang einer Schleifscheibe (22), verfahrbar aufgenommen ist.

14. Verwendung eines Düsensatzes (106) zur Bildung einer Düsenanordnung (52) nach einem der Ansprüche 1 bis 12 für eine Werkzeugmaschine (10) nach Anspruch 13, wobei bei Düsensatz (106) Folgendes aufweist:
- zumindest eine erste additiv gefertigte Düse (56; 108, 110, 112, 114) eines ersten Düsentyps, und
- zumindest eine zweite additiv gefertigte Düse (56; 108, 110, 112, 114) eines zweiten Düsentyps,
wobei sich der erste Düsentyp und der zweite Düsentyp zumindest hinsichtlich der Anordnung ihrer Auslassöffnungen oder hinsichtlich der effektiven Strömungsquerschnitte voneinander unterscheiden.

15. Digitale Datenverkörperung, insbesondere CAD-Datenverkörperung, zumindest einer Düse (56; 108, 110, 112, 114) für eine Düsenanordnung (52) nach einem der Ansprüche 1 bis 12, wobei die Datenverkörperung dazu geeignet ist, mittels eines additiven Verfahrens unter Verwendung der Datenverkörperung zumindest eine KSS-Düse (56; 108, 110, 112, 114) für die Düsenanordnung (52) herzustellen.

## Claims

1. A modular nozzle arrangement (52) for coolant lubricants (KSS), comprising:
a distributor block (54) providing an inlet (92) and a plurality of outlets (96, 98, 100, 102) for a KSS fluid, and
at least one KSS nozzle (56; 108, 110, 112, 114) receivable at an outlet (96, 98, 100, 102), and being selectable from a nozzle set (106),
wherein at least the at least one nozzle (56; 108, 110, 112, 114) is additively manufactured,
wherein the outlets (96, 98, 100, 102) each have a seat (120) to accommodate a connector piece (122) of the nozzle (56; 108, 110, 112, 114),
**characterized in that**:
the at least one nozzle has an internal flow-guiding contour (138, 168, 178) with curved flow channels (142, 144, 146, 148; 172; 188, 190),
in the coupled state, a first seal (196) and a second seal (198) are provided between the seat (120) and the connector piece (122),
the first seal (196) is arranged as a radially effective seal, and the second seal (198) as an axially effective seal, and
a groove (204) interacting with a locking slider (124), particularly an encircling groove, is formed on the connector piece (122).

2. The nozzle arrangement (52) according to claim 1, wherein both the distributor block (54) and the at least one nozzle (56; 108, 110, 112, 114) are additively manufactured and have an internal flow-guiding contour (138, 168, 178) with curved flow channels (142, 144, 146, 148; 172; 188, 190).

3. The nozzle arrangement (52) according to claim 1 or 2, comprising a plurality of nozzles (56; 108, 110, 112, 114), each coupled with an outlet (96, 98, 100, 102).

4. The nozzle arrangement (52) according to any one of claims 1 to 3, wherein the at least one nozzle (56; 108, 110, 112, 114) has an abutment plate (156), with the connector piece (122) extending from the abutment plate (156), and wherein a position-locking element (158) is arranged on the abutment plate (156), engaging in a recess (160) on the seat (120) when assembled and defining the rotational position of the nozzle (56; 108, 110, 112, 114) on the seat (120) in the mounted state.

5. The nozzle arrangement (52) according to any one of claims 1 to 4, wherein the connector piece (122) carries the first seal (196), which is arranged in a receiving groove (200), and wherein the receiving groove (200) is preferably at least slightly offset or eccentric relative to the longitudinal axis of the connector piece (122).

6. The nozzle arrangement (52) according to any one of claims 1 to 5, wherein the first seal (196) and the second seal (198) are ring seals.

7. The nozzle arrangement (52) according to any one of claims 1 to 6, wherein in the assembled state, the locking slider (124) axially presses the nozzle (56; 108, 110, 112, 114) into the seat (120).

8. The nozzle arrangement (52) according to any one of claims 1 to 7, wherein outlets (96, 98, 100, 102) that are not coupled with a nozzle (56; 108, 110, 112, 114) are each closed with a blind plug (116).

9. The nozzle arrangement (52) according to any one of claims 1 to 8, wherein at least one installed nozzle (56; 108, 110, 112, 114) has a fanned fluid path, and/or wherein the at least one nozzle (56; 108, 110, 112, 114) has a branching (170, 186) defining a plurality of outlet openings.

10. The nozzle arrangement (52) according to any one of claims 1 to 9, wherein the at least one nozzle (56; 108, 110, 112, 114) has outlet openings (182, 184) that are arranged offset from one another, and that are arranged in a first row and a second row, the second row being angularly offset from the first one.

11. The nozzle arrangement (52) according to any one of claims 1 to 10, wherein the nozzles (56; 108, 110, 112, 114) are manufactured using stereolithography, with fluid channels in the nozzles (56; 108, 110, 112, 114) additively manufactured without subtractive or smoothening post-processing, and wherein the nozzles (56; 108, 110, 112, 114) particularly comprise or consist of polyacrylates.

12. The nozzle arrangement (52) according to any one of claims 1 to 11, wherein the distributor block (54) is manufactured using selective laser sintering, with fluid channels in the distributor block (54) additively manufactured without subtractive or smoothening post-processing, and wherein the distributor block (54) particularly comprises or consists of polyamides.

13. A machine tool (10), particularly a grinding machine, with a nozzle arrangement (52) according to any one of claims 1 to 12, wherein the nozzle arrangement (52) includes a KSS sensor (58), the machine tool further comprising or being coupled with a KSS supply system (50) including a pump (68), particularly a frequency-controlled pump, the pump (68) being connected via a supply line (70) to the inlet (92) of the distributor block (54), the machine tool further comprising a control device (34, 64) evaluating signals from the KSS sensor (58) and operating the KSS supply system (50) accordingly to deliver a desired fluid amount, and wherein the nozzle arrangement (52) is mounted to a tool unit (18) and movable relative to the tool unit (18), particularly relative to the circumference of a grinding wheel (22).

14. A use of a nozzle set (106) to form a nozzle arrangement (52) according to any one of claims 1 to 12 for a machine tool (10) according to claim 13, wherein the nozzle set (106) comprises:
- at least one first additively manufactured nozzle (56; 108, 110, 112, 114) of a first nozzle type, and
- at least one second additively manufactured nozzle (56; 108, 110, 112, 114) of a second nozzle type,
wherein the first nozzle type and the second nozzle type differ at least in terms of the arrangement of their outlet openings or their effective flow cross-sections.

15. A digital data representation, particularly a CAD data representation, of at least one nozzle (56; 108, 110, 112, 114) for a nozzle arrangement (52) according to any one of claims 1 to 12, the data representation being suitable for manufacturing at least one KSS nozzle (56; 108, 110, 112, 114) for the nozzle arrangement (52) based on the data representation and using an additive process.

## Revendications

1. Agencement de buses (52) modulaire pour lubrifiants réfrigérants (KSS), présentant les éléments suivants :
un bloc de distribution (54) qui fournit une entrée (92) et plusieurs sorties (96, 98, 100, 102) pour un fluide KSS, et
au moins une buse pour KSS (56 ; 108, 110, 112, 114) pouvant être reçue au niveau d'une sortie (96, 98, 100, 102) et pouvant être sélectionnée parmi un jeu de buses (106),
dans lequel au moins l'au moins une buse (56 ; 108, 110, 112, 114) est fabriquée par fabrication additive,
dans lequel les sorties (96, 98, 100, 102) présentent respectivement un logement (120) destiné à recevoir une tubulure de raccordement (122) de la buse (56 ; 108, 110, 112, 114),
**caractérisé en ce**
**que** l'au moins une buse présente un contour de guidage d'écoulement interne (138, 168, 178) comportant des canaux d'écoulement (142, 144, 146, 148 ; 172 ; 188, 190) courbes,
**que,** à l'état accouplé, un premier joint d'étanchéité (196) et un second joint d'étanchéité (198) sont prévus entre le logement (120) et la tubulure de raccordement (122),
**que** le premier joint d'étanchéité (196) est conçu comme un joint d'étanchéité à action radiale et le second joint d'étanchéité (198) est conçu comme un joint d'étanchéité à action axiale, et
**qu'**une rainure (204), en particulier une rainure périphérique, est formée sur la tubulure de raccordement (122), laquelle rainure coopère avec un coulisseau de blocage (124).

2. Agencement de buses (52) selon la revendication 1, dans lequel à la fois le bloc de distribution (54) et l'au moins une buse (56 ; 108, 110, 112, 114) sont fabriqués par fabrication additive et présentent un contour de guidage d'écoulement interne (138, 168, 178) comportant des canaux d'écoulement (142, 144, 146, 148 ; 172 ; 188, 190) courbes.

3. Agencement de buses (52) selon la revendication 1 ou 2, comprenant une pluralité de buses (56 ; 108, 110, 112, 114) qui sont respectivement accouplées à une sortie (96, 98, 100, 102).

4. Agencement de buses (52) selon l'une des revendications 1 à 3, dans lequel l'au moins une buse (56 ; 108, 110, 112, 114) présente une plaque de butée (156), dans lequel la tubulure de raccordement (122) s'étend à partir de la plaque de butée (156), et dans lequel un élément de blocage en position (158) est disposé sur la plaque de butée (156), lequel vient en prise dans un évidement (160) sur le logement (120) à l'état assemblé et définit une position de rotation de la buse (56 ; 108, 110, 112, 114) sur le logement (120) à l'état monté.

5. Agencement de buses (52) selon l'une des revendications 1 à 4, dans lequel la tubulure de raccordement (122) supporte le premier joint d'étanchéité (196) qui est disposé dans une rainure de réception (200), et dans lequel la rainure de réception (200) est de préférence au moins légèrement décalée par rapport à un axe longitudinal de la tubulure de raccordement (122) ou est conçue de manière excentrée par rapport à celui-ci.

6. Agencement de buses (52) selon l'une des revendications 1 à 5, dans lequel le premier joint d'étanchéité (196) et le second joint d'étanchéité (198) sont des joints annulaires.

7. Agencement de buses (52) selon l'une des revendications 1 à 6, dans lequel, à l'état monté, le coulisseau de blocage (124) pousse la buse (56 ; 108, 110, 112, 114) axialement dans le logement (120).

8. Agencement de buses (52) selon l'une des revendications 1 à 7, dans lequel des sorties (96, 98, 100, 102) non accouplées à une buse (56 ; 108, 110, 112, 114) sont respectivement fermées par un bouchon borgne (116).

9. Agencement de buses (52) selon l'une des revendications 1 à 8, dans lequel au moins une buse (56 ; 108, 110, 112, 114) encastrée présente un trajet de fluide en éventail, et/ou dans lequel l'au moins une buse (56 ; 108, 110, 112, 114) présente une ramification (170, 186) qui définit une pluralité d'orifices de sortie.

10. Agencement de buses (52) selon l'une des revendications 1 à 9, dans lequel l'au moins une buse (56 ; 108, 110, 112, 114) présente des orifices de sortie (182, 184) disposés de manière à être décalés les uns par rapport aux autres et disposés en une première rangée et en une seconde rangée décalée angulairement par rapport à celle-ci.

11. Agencement de buses (52) selon l'une des revendications 1 à 10, dans lequel les buses (56 ; 108, 110, 112, 114) sont produites par stéréolithographie, dans lequel des canaux de fluide dans les buses (56 ; 108, 110, 112, 114) sont fabriqués par fabrication additive sans post-traitement d'enlèvement ou de lissage, et dans lequel les buses (56 ; 108, 110, 112, 114) comprennent en particulier des polyacrylates ou sont constituées de ceux-ci.

12. Agencement de buses (52) selon l'une des revendications 1 à 11, dans lequel le bloc de distribution (54) est produit par frittage sélectif par laser, dans lequel des canaux de fluide dans le bloc de distribution (54) sont fabriqués par fabrication additive sans post-traitement d'enlèvement ou de lissage, et dans lequel le bloc de distribution (54) comprend en particulier des polyamides ou est constitué de ceux-ci.

13. Machine-outil (10), en particulier meuleuse, comportant un agencement de buses (52) selon l'une des revendications 1 à 12, dans laquelle l'agencement de buses (52) présente un capteur de KSS (58), dans laquelle la machine-outil présente en outre un moyen d'alimentation en KSS (50) comportant une pompe (68), en particulier une pompe à commande par fréquence, ou est accouplée à celui-ci, dans laquelle la pompe (68) est reliée par l'intermédiaire d'une conduite d'alimentation (70) à l'entrée (92) du bloc de distribution (54), dans laquelle la machine-outil présente en outre un appareil de commande (34, 64) qui évalue des signaux du capteur de KSS (58) et fait fonctionner le moyen d'alimentation en KSS (50) sur la base de ceux-ci afin de distribuer une quantité de fluide souhaitée, et dans laquelle l'agencement de buses (52) est reçu sur une unité d'outil (18) de manière à pouvoir être déplacé par rapport à l'unité d'outil (18), en particulier par rapport à la périphérie de meule d'une meule (22).

14. Utilisation d'un jeu de buses (106) pour la formation d'un agencement de buses (52) selon l'une des revendications 1 à 12 pour une machine-outil (10) selon la revendication 13, dans laquelle le jeu de buses (106) présente les éléments suivants :
- au moins une première buse (56 ; 108, 110, 112, 114) d'un premier type de buse fabriquée par fabrication additive, et
- au moins une seconde buse (56 ; 108, 110, 112, 114) d'un second type de buse fabriquée par fabrication additive,
dans laquelle le premier type de buse et le second type de buse se distinguent l'un de l'autre au moins en ce qui concerne la disposition de leurs orifices de sortie ou en ce qui concerne les sections transversales d'écoulement effectives.

15. Représentation de données numériques, en particulier représentation de données CAO, d'au moins une buse (56 ; 108, 110, 112, 114) pour un agencement de buses (52) selon l'une des revendications 1 à 12,
dans laquelle la représentation de données est adaptée pour produire, au moyen d'un procédé de fabrication additive en utilisant la représentation de données, au moins une buse pour KSS (56 ; 108, 110, 112, 114) pour l'agencement de buses (52).
